# EUROPÄISCHE PATENTSCHRIFT

(11) **EP 2 868 718 B1**
(45) Veröffentlichungstag und Bekanntmachung des Hinweises auf die Patenterteilung: **10.07.2019**
(21) Anmeldenummer: 14190470.6
(22) Anmeldetag: 27.10.2014
(51) Int. Cl.: H01B 13/30, C09D 1/04, C09D 5/24, H01B 1/18, H01B 1/24

(54) **Substrat mit elektrisch leitfähiger Beschichtung sowie Verfahren zur Herstellung eines Substrates mit einer elektrisch leitfähigen Beschichtung**
Substrate with electrically conductive coating as well as method of preparing a substrate with an electrically conductive coating
Substrat doté d'un revêtement électroconducteur et procédé de fabrication d'un substrat doté d'un revêtement électroconducteur

(30) Priorität: 04.11.2013 DE 102013112109
(43) Veröffentlichungstag der Anmeldung: 06.05.2015
(73) Patentinhaber: Schott AG, 55122 Mainz (DE)
(72) Erfinder: Gabriel, Annelie, 55270 Klein-Winternheim (DE)
(74) Vertreter: Blumbach · Zinngrebe Patentanwälte PartG mbB

(56) Entgegenhaltungen:
- DE-A1- 19 946 712
- JP-A- 2005 190 819

## Beschreibung

### Gebiet der Erfindung

Die Erfindung betrifft im Allgemeinen Substrate mit elektrisch leitfähiger Beschichtung sowie ein Verfahren zur Herstellung einer entsprechenden Beschichtungsmasse sowie eines damit beschichteten Substrates. Im Speziellen betrifft die Erfindung Glas- oder Glaskeramiksubstrate mit einer elektrisch leitfähigen Beschichtung sowie eine entsprechende Beschichtungsmasse sowie ein Herstellungsverfahren.

Aus dem Stand der Technik sind elektrisch leitfähige Beschichtungen auf Glas- oder Glaskeramiksubstraten bekannt, die beispielsweise als elektrische Schaltkreise für Touchpanels eingesetzt werden. Insbesondere werden diese Beschichtungen zunehmend zur Steuerung von Glaskeramikkochfeldern, beispielsweise zur Steuerung von Induktionsherden verwendet.

Auf Grund der Vielzahl an Design- und Gestaltungsmöglichkeiten hat sich zunehmend der Einsatz von transparenten Glaskeramiken als Kochfelder etabliert. Diese kann dabei mit unterschiedlichen Beschichtungen versehen werden, um das gewünschte Design zu erhalten und die Bauteile unterhalb der Kochfläche zu verbergen. In der Regel wird die Glaskeramik hierzu meist zunächst mit einer farbgebenden Beschichtung, häufig mit einer Sol-Gelbasierten Beschichtung und anschließend mit einer Versiegelungsschicht versehen. Die Versiegelungsschicht kann dabei insbesondere eine silikon-basierte Schicht sein und wird bei Einbrandtemperaturen von 200 bis 250°C aufgebracht.

Sollen derartige Glaskeramikkochfelder zudem eine elektrisch leitfähige Schicht, beispielsweise zur Steuerung eines Touch Panels aufweisen, wird diese Schicht als dritte Schicht bzw. nach dem Aufbringen von Dekor- und Versiegelungsschichten aufgebracht. Dies bedingt jedoch Einbrandtemperaturen unterhalb 250°C, um Dekor- und Versiegelungsschichten nicht zu beschädigen.

Aus dem Stand der Technik sind elektrisch leitfähige Beschichtungen bekannt, die Edelmetalle, beispielsweise Gold oder Silber, enthalten und mittels Glasfluss bei Temperaturen von über 550°C auf das Substrat aufgebracht werden. So beschreibt die JP 2006 054091 A1 eine metallbasierte, leitfähige Beschichtung auf einem Glassubstrat. Hierbei wird das Glassubstrat mit einer Beschichtungsmasse aus Metall, organischem Binder und Glasfluss beschichtet und die Beschichtung bei Temperaturen von 550 bis 900°C eingebrannt. Abgesehen vom hohen Rohstoffpreis dieser Beschichtungen erweisen sich die hohen Einbrandtemperaturen zunehmend als nachteilig.

Weiterhin sind aus dem Stand der Technik elektrisch leitfähige Beschichtungen auf Basis von Kohlenstoff bekannt. Als Bindemittel kommen hier verschiedene Polymere wie beispielsweise modifizierte Polyurethane, Polyacrylate, Polyvinylchloride oder Polycarbonate zum Einsatz. Derartige Beschichtungen sind jedoch auf Grund der verwendeten Bindemittel nicht oder zumindest nicht ausreichend temperaturstabil, so dass derartige Beschichtungen nicht in Hochtemperaturanwendungen, beispielsweise als Beschichtung auf Kochfeldern, verwendet werden können.

Die Patentanmeldung WO 2006 128403 A1 beschreibt elektrisch leitfähige Pigmente wie Ruß, CNT, Fullerene oder Graphit, welche in nicht elektrisch leitende Binder wie Polyurethan, Polyacrylat oder Polycarbonat aufgebracht werden.

In der japanischen Patentschrift JP 433 33 58 B1 wird eine Carbonpaste beschrieben, die aus sphärischen und plättchenförmigen Graphitpartikel und Acetylenschwarz in einem Polyesterharz als Bindemittel besteht. Um eine ausreichende elektrische Leitfähigkeit zu gewährleisten, beträgt der Anteil an elektrisch leitenden Pigmenten 45 bis 60%.

Elektrisch leitfähige Beschichtungen mit einem Bindemittel auf Kunststoffbasis ermöglichen zwar geringe Einbrandtemperaturen, jedoch weisen die entsprechenden Beschichtungen eine relativ geringe Temperaturstabilität von 150 bis 250°C auf.

Eine weitere Möglichkeit besteht in der Verwendung eines Bindemittels auf Sol-Gel-Basis. Die rheologischen Eigenschaften dieser Bindemittel erfordern jedoch zum einen zur homogenen Verteilung elektrisch leitfähigen Füllstoffe sehr hohe Scherkräfte, was die Füllstoffe beschädigen und sich nachteilig auf die elektrische Leitfähigkeit auswirken kann, zum anderen werden meist zusätzliche Rheologie- und Steuermittel benötigt, um die Druckfähigkeit der Beschichtungsmasse zu gewährleisten.

### Aufgabe der Erfindung

Eine Aufgabe der Erfindung besteht daher darin, ein Verfahren zur Herstellung einer elektrisch leitfähigen, dauerhaft temperaturstabilen Beschichtung bereitzustellen, welche die oben erwähnten Nachteile nicht aufweist. Insbesondere ist es eine Aufgabe der Erfindung, ein Verfahren zur Herstellung einer elektrisch leitfähigen, dauerhaft temperaturstabilen Beschichtung bereitzustellen, welche bereits bei geringen Einbrandtemperaturen eine gute elektrische Leitfähigkeit aufweist. Unter einer dauerhaft temperaturstabilen Beschichtung wird dabei insbesondere eine Beschichtung verstanden, die unter einer Dauertemperaturbelastung bei Temperaturen von zumindest 300°C, bevorzugt von bis zu 500°C stabil ist.

Eine weitere Aufgabe der Erfindung besteht in der Bereitstellung einer entsprechenden druckfähigen Beschichtungsmasse sowie in der Bereitstellung eines Substrates mit einer temperaturstabilen, elektrisch leitfähigen Beschichtung.

Die Aufgabe der Erfindung wird dabei bereits durch den Gegenstand der unabhängigen Ansprüche gelöst. Vorteilhafte Weiterbildungen und Ausgestaltungen sind Gegenstand der Unteransprüche.

### Beschreibung der Erfindung

Das Verfahren zur Herstellung einer elektrisch leitfähigen Beschichtung auf einem Substrat, umfasst zumindest die folgenden Schritte:
- Bereitstellung eines Bindemittels, wobei das Bindemittel eine anorganisch vernetzte, SiO₂-haltige Bindemittelmatrix und ein Lösungsmittel enthält,
- Herstellung einer Dispersion eines elektrisch leitfähigen Pigments im Bindemittel durch mechanische Konvektion, insbesondere unter Verwendung eines Rührers, wobei der Anteil an elektrisch leitfähigem Pigment 10 bis 40 Gew.-% beträgt und als elektrisch leitfähiges Pigment Kohlenstoff verwendet wird,
- teilweises, strukturiertes Aufdrucken der durch Dispersion des elektrisch leitfähigen Pigments im Bindemittel erhaltenen Beschichtungsmasse auf dem Substrat,
- Trocknen der erhaltenen Beschichtung bei Temperaturen im Bereich von 20 bis 250°C.

Es handelt sich bei dem Bindemittel um ein Sol-Gelbasiertes Bindemittel. So weist das Bindemittel ein anorganisch vernetztes Sol-Gel-Netzwerk als Bindemittelmatrix auf.

Gemäß einer Weiterbildung der Erfindung erfolgt die Bereitstellung des Sol-Gel-Bindemittels durch Hydrolyse, so dass in dieser Weiterbildung der Erfindung das Herstellungsverfahren folgende zusätzliche Verfahrensschritte zur Bereitstellung des Bindemittels umfasst:
a) Herstellung eines Sol-Gel-Bindemittels als ein Hydrolysat durch Hydrolyse eines Monomers mit Wasser, wobei ein niedrig siedender Alkohol als flüssiges Kondensationsprodukt gebildet wird und der anorganische Vernetzungsgrad des Hydrolysates durch das Verhältnis von Wasser zu Monomer eingestellt wird und
b) Austausch des in Schritt a) gebildeten Alkohols gegen ein Lösungsmittel mit einem Dampfdruck < 5 bar, einem Siedpunkt > 120° und/oder einer Verdunstungszahl > 10

In Schritt a) erfolgt zunächst die Herstellung des Bindemittels. Dabei handelt es sich um ein Bindemittel auf Sol-Gel-Basis, welches durch Hydrolyse eines Monomers erhalten wird. Als Sol-Gel-Monomer wird bevorzugt ein Metallalkoholat verwendet, bevorzugt Alkoxysilane, beispielsweise Tetraethoxysilan (TEOS), Aluminiumalkoholate, Titanalkoholate, Zirkonalkoholate und/oder Organometallalkoholate. Weiterhin kann ein Tetraalkoxysilan Si(OR¹)₄ (mit R¹ = Methyl, Ethyl, Propyl, iso-Propyl, Butyl, sec. Butyl oder Phenyl) oder ein Aluminiumalkoholat oder ein Titanalkoholat oder ein Zirkonalkoholat in Kombination mit einem Alkoxysilan Si(OR¹)₃R², welches eine organisch vernetzbare Funktionalität besitzt, verwendet werden (R²= Alkylkette funktionalisiert mit Glycidoxy, Methacryloxy, Acryl, Vinyl, Allyl, Amino, Mercapto, Isocyanato, Epoxy, Acrylat oder Methacrylat. Organisch vernetzbare Alkoxysilane können beispielsweise Sein: Glycidyoxypropyltriethoxysilan (GPTES), Methacryloxypropyltriethoxysilan (MPTES), Glycidyloxypropyltrimethoxysilan (GPTMS), Methacryloxypropyltrimethoxysilan MPTMS), Vinyltriethoxysilan (VTES), Allyltriethoxysilan (ATES), Aminopropyltriethoxysilan (APTES), Mercaptopropyltriethoxysilan (MPTES), 3-Isocyanatopropyltriethoxysilan (ICPTES). Wahlweise wird noch ein weiteres Metallalkoholat eingesetzt, beispielsweise Zirkontetrapropylat (Zr(OR¹)₄), Titantetraethylat (Ti(OR¹)₄) oder Alumimiumsecundärbutylat (Al(OR¹)₃). Wahlweise wird noch ein weiteres Organoalkoxysilan eingesetzt, beispielsweise Si(OR¹)₃R³, Si(OR¹)₂R³₂, Si(OR¹)R³₃ (mit R¹ = Methyl, Ethyl, Propyl, Butyl, sec. Butyl; R³: Methyl, Phenyl, Ethyl, iso-Propyl, Butyl, sec. Butyl), beispielsweise Methyltriethoxysilan (MTEOS), Phenyltriethoxysilan (PhTEOS), Dimethyldiethoxysilan (DEMDEOS). Die Herstellung des (Sol-Gel-)Hydrolysats erfolgt durch die gezielte Umsetzung der Monomere mit Wasser. Bevorzugt wird dies in Gegenwart einer Säure durchgeführt, beispielsweise Salzsäure, Schwefelsäure, Paratoluolsulfonsäure, Essigsäure. Die wässrige Hydrolyselösung hat bevorzugt einen pH < 4. In einer besonderen Ausführungsform kann die Hydrolyse auch in alkalischer Umgebung durchgeführt werden (z.B.: NH₃, NaOH). In einer weiteren speziellen Ausführungsform erfolgt die Hydrolyse mit einer wässrigen Nanopartikeldispersion. Der Vernetzungsgrad des Hydrolysates wird über das Verhältnis von Wasser zu hydrolysierbaren Monomeren eingestellt. Die Matrix kann dielektrisch oder nicht dielektrisch sein.

Bevorzugt ist der Restlösungsmittelgehalt des Hydrolysats kleiner als 20 Gew.-%, besonders bevorzugt kleiner als 19 Gew.-%.

Gemäß einer Ausführungsform der Erfindung wird als Sol-Gel-Monomer ein Trialkoxy- und/oder ein Tetraalkoxysilan verwendet. Durch Verwendung einer Mischung mehrerer Alkoxysilane, beispielsweise einer Mischung eines Trialkoxysilans und eines Tetraalkoxysilans, kann ein anorganisch-organisches Hybridnetzwerk mit organischen Gruppen erhalten werden. In einer bevorzugten Ausführungsform werden als Monomere Tetraethoxysilan (TEOS) und/oder Methyltriethoxysilan (MTEOS) verwendet.

Es kann jedoch auch nur ein Monomer verwendet werden. So wird in einer Ausführungsform der Erfindung als alleiniges Monomer ein Tetraalkoxysilan zu verwenden. Hierdurch wird ein rein anorganisch vernetztes Sol-Gel-Netzwerk mit nur einem sehr geringen Anteil an organischen Gruppen gebildet.

Die Hydrolyse erfolgt in Gegenwart eines Katalysators. Insbesondere erfolgt die Hydrolyse sauer katalysiert, wobei eine Säure, beispielsweise Salzsäure oder paraToluolsulfonsäure, zugegeben wird.

Der gewünschte anorganische Vernetzungsgrad des durch die Hydrolysereaktion der Monomere bzw. des Monomers mit Wasser entstandenen Hydrolysats bzw. der Bindemittelmatrix kann dabei durch das Verhältnis von Monomer zu Wasser eingestellt werden.

Der anorganische Vernetzungsgrad der Bindemittelmatrix bzw. des Sol-Gel-Netzwerkes beträgt 40 bis 90%, bevorzugt 50 bis 80% und besonders bevorzugt 60 bis 80%. Ein niedriger Vernetzungsgrad führt dabei zu einer langen Haltbarkeit der Beschichtungsmasse. Gleichzeitig darf für die Bildung einer stabilen Schicht der Vernetzungsgrad nicht zu gering sein. Der anorganische Vernetzungsgrad wird dabei mittels ²⁹Si-NMR bestimmt.

Das Verfahren sieht im nachfolgenden Schritt b) einen zumindest teilweisen Austausch des in Schritt a) gebildeten Alkohols gegen ein höher siedendes Lösungsmittel vor.

Hierbei wird der als flüssiges Kondensationsprodukt gebildete Alkohol sowie durch die Hydrolysereaktion entstandene Nebenprodukte zumindest teilweise entfernt und ein hoch siedendes Lösungsmittel hinzugefügt. Gemäß einer Ausführungsform beträgt der Anteil des flüssigen Kondensationsproduktes im Bindemittel nach dem Austausch maximal 10 Gew-%, bevorzugt maximal 5 Gew-%.

Durch den Lösungsmittelaustausch wird eine druckfähige, insbesondere siebdruckfähige Paste erhalten. Die Druckfähigkeit wird dabei bereits durch den Lösungsmittelaustausch bzw. das verwendete Lösungsmittel gewährleistet, so dass auf eine weitere Zugabe von Additiven wie beispielsweise Rheologie-Steuerungsmitteln verzichtet werden kann.

Insbesondere weist das Lösungsmittel einen Dampfdruck < 5 bar, bevorzugt < 1 bar und besonders bevorzugt < 0,1 bar, einen Siedepunkt > 120°C, bevorzugt > 150°C und besonders bevorzugt > 200°C und/oder eine Verdunstungszahl > 10, bevorzugt > 500 und besonders bevorzugt > 1000 auf. Dies hat sich insbesondere in Hinblick auf die Prozessierbarkeit der Beschichtungsmasse beim Siebdruckverfahren als vorteilhaft herausgestellt.

Als Lösungsmittel sind insbesondere Glykole, Glykolether, Terpene und/oder Polyole, besonders bevorzugt ausgewählt aus der Gruppe Butylacetat, Methoxybutylacetat, Butyldiglykol, Butyldiglykolacetat, Cyclohexanon, Diacetonalkohol, Diethylengykol, Dipropylenglykolmonomethylether, Dipropylenglykolmonobutylether, Propylenglykolmonobutylether, Propylenglykolmonopropylether, Propylenglykolmonoethylether, Ethoxypropylacatat, Hexanol, Methoxyprpylacetat, Monoethylenglykol, Ethylpyrrolidon, Dipropylenglykolmonobutylether, Propylenglykol, Propylenglykolmonomethylether, Gemische aus parafinischen und naphtenischen Kohlenwasserstoffen, aromatische Kohlenwasserstoffgemische, Mischungen aromatischer, alkylierter Kohlenwasserstoffe, Gemische von n-, i- und cyclo-Aliphaten und Terpineol geeignet. Auch die Verwendung von Lösungsmittelgemischen ist möglich.

Gemäß einer Ausführungsform der Erfindung kann das Lösungsmittel sowohl zum in Schritt a) erzeugten Hydrolysat als auch zur pigmentierten Farbe, d.h. zum elektrisch leitfähigen Pigment hinzugefügt werden.

In einer Weiterbildung der oben beschriebenen Variante der Erfindung erfolgt in Schritt a) die Hydrolyse des Monomers mit einer wässrigen, anorganischen Nanopartikeldispersion, bevorzugt mit einer wässrigen SiO₂-Nanopartikeldispersion. Somit kann ein Bindemittel erhalten werden, das eine Sol-Gel-Bindemittelmatrix und darin eingebettete, anorganische Nanopartikel aufweist. Durch Zugabe der Nanopartikel als Dispersion bereits während der Hydrolyse kann eine besonders gleichmäßige Verteilung der Nanopartikel erzielt werden. Es ist jedoch auch möglich, die Nanopartikel in einem separaten Schritt in das Sol-Gel-Bindemittel zu dispergieren ohne die Erfindung zu verlassen.

Die mit dem erfindungsgemäßen Herstellungsverfahren hergestellten Beschichtungen weisen eine gute Anhaftung auf dem Substrat auf, so dass auf die Zugabe eines Haftvermittlers verzichtet werden kann. Jedoch ist es möglich, die Anhaftung durch Zugabe eines Haftvermittlers weiter zu erhöhen, ohne die Erfindung zu verlassen. Gemäß einer anderen Weiterbildung der Erfindung wird in Schritt a) zusätzlich ein Haftvermittler, bevorzugt Amino- und/oder Mercaptosilane zugegeben. Bevorzugt beträgt das Verhältnis zwischen Sol-Gel-Monomer und Haftvermittler 10:1 bis 100:1, besonders bevorzugt 15:1 bis 50:1.

Beim erfindungsgemäßen Verfahren erfolgt die Herstellung einer Dispersion eines elektrisch leitfähigen Pigments im Bindemittel, wobei es sich bei dem elektrisch leitfähigen Pigment um Kohlenstoff handelt. Als elektrisch leitfähiges Pigment werden dabei insbesondere Graphit, CNT oder Ruß zugesetzt. Es hat sich dabei überraschender Weise herausgestellt, dass bereits bei Verwendung eines Pigments die erhaltende Beschichtung eine hohe elektrische Leitfähigkeit aufweist. Bevorzugt wird daher nur ein Pigment, d.h. keine Mischung verschiedener Pigmente wie beispielsweise eine Mischung aus Graphit und Carbonnanotubes, in das Bindemittel dispergiert.

Gemäß einer bevorzugten Ausführungsform werden Graphitpartikel, insbesondere plättchenförmige Graphitpartikel, als elektrisch leitfähiges Pigment zum Bindemittel gegeben. Gerade die Verwendung von plättchenförmigen Graphitpartikeln gewährleistet dabei auf Grund ihrer Form, welche eine Ausrichtung der Partikel parallel zur Substratoberfläche ermöglicht, eine hohe elektrische Leitfähigkeit der späteren Beschichtung. Unter plättchenförmigen Graphitpartikel werden im Sinne der Erfindung auch solche Graphitpartikel verstanden, die eine stark anisometrische, nadelförmige Form aufweisen. Die Verwendung von stark anisometrischen, nadelförmigen Graphitpartikeln als elektrisch leitfähiges Pigment hat sich als besonders vorteilhaft in Bezug auf die elektrische Leitfähigkeit der späteren Beschichtung, herausgestellt.

Insbesondere werden plättchenförmige Graphitpartikel mit einer durchschnittlichen Größe d90 von 1 bis 100 µm, bevorzugt von 5 bis 50 µm und besonders bevorzugt von 10 bis 25 µm verwendet.
Der Anteil an elektrisch leitfähigem Pigment in der Beschichtungsmasse beträgt 10 bis 40 Gew.-%, bevorzugt 10 bis 35 Gew.-% und besonders bevorzugt 12 bis 30 Gew.-%. Durch den vergleichsweise geringen Pigmentanteil in Zusammenspiel mit dem Bindemittel erfolgt im erfindungsgemäßen Verfahren eine homogene Verteilung bereits alleine durch mechanische Konvektion, insbesondere unter Verwendung eines Rührers.

Bevorzugt wird hierzu ein axial fördernder Rührer verwendet. Dies ist besonders vorteilhaft, da bei axial fördernden Rührern im Vergleich zu radial fördernden Rührern geringe Scherkräfte auftreten. In einer Ausführungsform wird ein Flügel- oder Propellerrührer, bevorzugt ein 3- oder 4-flügeliger Propellerrührer verwendet. Es hat sich als besonders vorteilhaft herausgestellt, das Mischgut axial, beispielsweise von oben nach unten, anzusaugen. Hierdurch wird eine axiale Strömung im Gefäß erzeugt, wobei die örtlich auftretenden Scherkräfte minimal sind. Somit kommt es beim erfindungsgemäßen Verfahren nicht oder nur in sehr geringem Maße zu Deformationen oder Beschädigungen der elektrisch leitfähigen Partikel.

Insbesondere wird ein Rührer mit einer Drehzahl bis zu 3000 min⁻¹, bevorzugt mit einer Drehzahl im Bereich von 100 bis 2000 min⁻¹ und besonders bevorzugt mit einer Drehzahl im Bereich von 300 bis 1500 min⁻¹ verwendet.

Durch die relativ geringen Scherkräfte wird, anders als beispielsweise bei der im Stand der Technik beschriebene Verwendung einer Kugelmühle oder eines Walzenstuhls, sichergestellt, dass die eingesetzten Pigmente nicht deformiert oder anderweitig beschädigt werden.

Obwohl der Anteil an elektrisch leitfähigem Pigment in der Beschichtungsmasse somit vergleichsweise sehr gering ist, weist die Beschichtung dennoch eine gute elektrische Leitfähigkeit auf. Dies ist insbesondere darauf zurückzuführen, dass auf Grund des erfindungsgemäßen, schonenden Homogenisierungsverfahrens bei der Dispersion der Pigmente im Bindemittel die Form der eingesetzten Pigmentpartikel erhalten bleibt und die Pigmentpartikel beispielsweise nicht deformiert werden. Gleichzeitig ermöglicht der geringe Anteil an elektrisch leitfähigem Pigment erst die Verwendung von geringen Scherkräften, so dass zwischen der maximal angewendeten Scherkraft bzw. dem angewendeten Homogenisierungsverfahren und dem geringen Pigmentanteil ein synergetischer Effekt vorherrscht.

Dieser synergetische Effekt ist dabei bei der Verwendung von plättchenförmigen Graphitpartikeln als elektrisch leitfähiges Pigment besonders stark ausgebildet. Durch die Homogenisierung mit geringen Scherkräften bei der Herstellung der Dispersion kommt es, anders als bei konventionellen Homogenisierungsverfahren, nicht oder nur in sehr geringem Ausmaß zu Defekten an den elektrisch leitfähigen Pigmenten, beispielsweise bei Graphitplättchen durch ein Abbrechen von Teilbereichen der Plättchen.
Die so erhaltene Beschichtungsmasse wird in einem nachfolgenden Verfahrensschritt auf einem Substrat, vorzugsweise aus einem Substrat umfassend Glas oder Glaskeramik, teilweise strukturiert, d.h. nicht vollflächig, aufgedruckt.

Das Druckverfahren kann ein Siebdruckverfahren, Ink-Jet-Druckverfahren, ein Off-Set-Druckverfahren, ein Tampon-Druckverfahren, ein Roll-Coating-Verfahren, ein Tauchverfahren, ein Spin-Coating-Verfahren oder ein Sprühverfahren sein. Bevorzugt wird das Beschichtungsmaterial mittels Siebdruckverfahren auf das Substrat aufgebracht.

Als Substrat können generell wärmebeständige Materialien wie Metalle, Legierungen, entsprechende Kunststoffe, Glas, Glaskeramik oder Keramik verwendet werden. Bevorzugt handelt es sich bei dem Substrat um eine Glaskeramik. Die Glaskeramik kann dabei beschichtet sein. Insbesondere kann die Glaskeramik eine Dekor- und/oder eine silikonbasierte Versiegelungsschicht aufweisen.

Als Substrat werden Spezialglassubstrate bevorzugt. Solche Spezialglassubstrate können Glaskeramiken, insbesondere transparent eingefärbte Lithiumalumosilikat(LAS)-Glaskeramiken, transparente LAS-Glaskeramiken oder Magnesiumalumosilikat-Glaskeramiken oder Lithiumdisilikat-Glaskeramiken, oder Silikatgläser, beispielsweise Borosilikatgläser, Zink-Borosilikatgläser, Boroalumosilikatgläser, Alumosilikatgläser, alkalifreie Gläser, Kalk-Natron-Gläser, oder ein aus den vorgenannten Gläsern und/oder Glaskeramiken gebildeter Verbundwerkstoff sein.

Bevorzugt wird ein thermoschockbeständiges Spezialglas oder eine Glaskeramik mit einem thermischen Ausdehnungskoeffizienten kleiner 4,0·10⁻⁶/K, bevorzugt kleiner 3,4·10⁻⁶/K verwendet. Bevorzugt wird ein Borosilikatglas oder eine Lithiumalumosilikatglaskeramik mit Hochquarzmischkristallphase bzw. Keatit verwendet. Der Kristallphasengehalt liegt dabei zwischen 60 - 85 %. In einer besonderen Ausführungsform wird ein vorgespanntes Spezialglassubstrat verwendet, insbesondere Boroalumosilikatgläser (beispielsweise SCHOTT Xensation™, Corning Gorilla™ I-III, Asahi Dragontrail™). Die Vorspannung kann dabei chemisch bzw. thermisch induziert sein. Das Substrat kann dabei starr oder flexibel sein. Das Substrat kann dabei planar oder gebogen oder verformt sein. Es können beidseitig glatt oder auch einseitig genoppte Substrate verwendet werden, wobei die genoppten Substrate mit einer Ausgleichsschicht (z.B. aus Polyurethan oder Silikonen oder Silikonharzen) versehen sein können, die die Gebrauchseigenschaften erfüllt. Das Substrat kann mechanisch bearbeitete oder auch geätzte Oberflächen aufweisen.

Bei Spezialglassubstraten bestehend aus transparent eingefärbter Glaskeramik liegt die Lichtdurchlässigkeit des Substrats im Sichtbaren (Lichtdurchlässigkeit gemäß ISO 9050:2003, 380-780 nm) bei einer Substratdicke von 4 mm bei 0,8-10 %. Die Transmission des Spezialglassubstrats liegt im Infraroten im Bereich von 850 nm bis 970 nm bei ≥ 45 %. Gemäß einer Ausführungsform wird eine Lithium-AluminiumSilikat (LAS)-Glaskeramik mit Hochquarzmischkristallen (HQMK) und/oder Keatitmischkristallen (KMK) als vorherrschende Kristallphase verwendet. Bevorzugt werden LAS-Glaskeramiken mit TiO₂, ZrO₂ und/oder SnO₂ als Keimbildner verwendet.

Bevorzugt weisen die verwendeten Glaskeramiken einen Kristallphasengehalt von 50 bis 85%, bevorzugt von 60 bis 80% und ganz besonders bevorzugt von 64 bis 77% auf.

Bevorzugt werden Substratgläser verwendet, wie sie im Bereich der weißen Ware bzw. Haushaltsgeräte eingesetzt werden, beispielsweise für Back- und Gargeräte, Mikrowellen, Kühlschränke, Dampfgarer, Bedienblenden für derartige Geräte, Gaskochgeräte, Spülen oder Geschirrspülgeräte. Besonders bevorzugt werden Substratgläser verwendet, wie sie für Kochfelder, Ofenscheiben oder Kaminsichtscheiben eingesetzt werden.

In einer vorteilhaften Ausgestaltung dieser Ausführungsform weisen die Substrate weniger als 1000 ppm, bevorzugt weniger als 500 ppm und ganz besonders bevorzugt weniger als 200 ppm Arsen und/oder Antimon auf. Gemäß einer Ausgestaltung ist die verwendete Glaskeramik frei von Arsen und Antimon. Insbesondere handelt es sich bei der Glaskeramik um eine transparente Glaskeramik.

Die leitfähige Beschichtung kann in einem oder mehreren Teilbereichen auf dem Substrat lateral strukturiert (beispielsweise im nm-, µm-, mm-, oder cm-Bereich) oder vollflächig aufgebracht werden. Eine derartige Strukturierung ermöglicht beispielsweise die Realisierung von Einzeltouch-Sensorenelektroden oder strukturierten Feldern aus Einzeltouch-Sensorelektroden im Kaltbereich eines Kochfeldes. Eine vollflächige Aufbringung der leitfähigen Beschichtung, bevorzugt in einem Teilbereich des Substrats, ermöglicht es beispielsweise, ein Touchfeld (Touchscreen) mit Ortauflösung bereitzustellen, bei dem beispielhaft die Ortsauflösung durch Auswertung der Differenzsignale an den Ecken erreicht wird.

In einer bevorzugten Ausführungsform wird ein transparentes Substrat, mit einer oder mehreren dekorativen Beschichtungen, wie beispielsweise farbige oder transparente Dekore, verwendet, wobei farbige Dekore pigmentiert sein können. In einer weiteren bevorzugten Ausführungsform wird ein transparentes Substrat, mit einer oder mehreren funktionalen Beschichtungen versehen, verwendet. Diese dekorativen und/oder funktionalen Beschichtungen können sich dabei auf der gleichen Seite wie die leitfähige Beschichtung oder auf der gegenüberliegenden Seite befinden. Die weiteren Beschichtungen können dabei sowohl vollflächig als auch strukturiert, wie beispielsweise als Kochzonenmarkierung bzw. mit einer Aussparung für ein Display, aufgebracht sein.

Ferner können auf das Substrat mehrere Lagen der leitfähigen Beschichtung aufgebracht werden. In einer besonderen Ausführungsform befindet sich zwischen mehreren leitfähigen Schichten eine dielektrische Schicht und/oder eine als Antireflexionsschicht wirksame Schicht. Beispielsweise kann die Antireflexionsschicht aus Siliziumoxid und/oder Siliziumnitrid bestehen. Ein derartiger Schichtaufbau ermöglicht es beispielsweise ortsaufgelöste kapazitive Multitouchsensoren zu realisieren.

Nach dem Aufbringen der Beschichtungsmasse bzw. der Zubereitung wird die so erhaltene Beschichtung bei Temperaturen im Bereich von 20 bis 250°C getrocknet. Hierdurch wird das Lösungsmittel weitgehend aus dem Bindemittel entfernt. Zudem erfolgt eine weitere Vernetzung der Bindemittelmatrix, so dass die Beschichtungen bereits nach dem Trocknungsschritt eine hohe Festigkeit aufweist.

Überraschenderweise zeichnen sich die Beschichtungen, die mit dem erfindungsgemäßen Verfahren hergestellt wurden, bereits nach dem Trocknen durch eine hohe elektrische Leitfähigkeit aus. Im Unterschied dazu wird mit bekannten Verfahren erst durch hohe Einbrenntemperaturen eine vergleichbare elektrische Leitfähigkeit erzielt.

In einer Weiterbildung der Erfindung kann beim Trocknungsprozess sogar gänzlich auf eine Temperaturbehandlung verzichtet werden. Zudem weisen die erfindungsgemäßen Beschichtungen auch bei geringen Trocknungs- oder Einbrandtemperaturen eine hohe Kratzresistenz auf.

Somit ist es möglich, eine elektrisch leitfähige Beschichtung zu erhalten, ohne dass die Beschichtung hierzu bei hohen Temperaturen eingebrannt werden muss. Die Beschichtung kann bei Temperaturen < 200°C oder sogar bei Raumtemperatur getrocknet werden. Dies ist vorteilhaft, wenn das Substrat bereits eine oder mehrere Beschichtungen, beispielsweise Dekor- oder Versiegelungsschichten aufweist, die auf Grund ihrer geringeren Temperaturstabilität keine hohen Einbrandtemperaturen erlauben. Durch die niedrigen Temperaturen können somit auch bereits vorbeschichtete Substrate, beispielsweise Substrate mit Sol-Gel- oder Silikon-basierten Schichten als Dekor- oder Versiegelungsschichten, welche bei hohen Temperaturen zerstört werden würden, zusätzlich mit einer elektrisch leitfähigen Beschichtung versehen werden.

Eine hohe elektrische Leitfähigkeit bei geringen Trocknungstemperaturen bzw. ohne Trocknungsschritt wird dabei insbesondere durch die Verwendung von plättchenförmigen Graphitpartikeln als elektrisch leitfähiges Pigment begünstigt, da sich die parallele Anordnung der plättchenförmigen Pigmentpartikel vorteilhaft auf die elektrische Leitfähigkeit auswirkt und hierzu kein Temperungsschritt benötigt wird.

Die erfindungsgemäße elektrisch leitfähige Beschichtung selbst weist dabei eine hohe Temperaturstabilität auf, so dass auch ein Einbrand bei Temperaturen von bis zu 500°C möglich ist. In einer Weiterbildung der Erfindung wird die Beschichtung daher nach dem Trocknungsschritt bei Temperaturen im Bereich von 200 bis 500°C eingebrannt. Hierdurch kann die elektrische Leitfähigkeit der Beschichtung nochmals erhöht werden. Dies ist insbesondere dann vorteilhaft, wenn das Substrat neben der elektrisch leitfähigen Schicht keine weitere oder zumindest keine temperaturempfindliche Beschichtung aufweist. Durch den Einbrandschritt verbessert sich zudem die Haftung der elektrisch leitfähigen Schicht auf dem Substrat, so dass die Schicht kratzresistenter wird. Durch die hohe Kratzresistenz der elektrisch leitfähigen Beschichtung in Verbindung mit der hohen Temperaturstabilität ist die Beschichtung insbesondere für die Verwendung auf Kochfeldern geeignet.

Des Weiteren betrifft die vorliegende Erfindung eine entsprechende Zubereitung, d.h. eine Beschichtungsmasse, zur Beschichtung eines Substrates mit einer elektrisch leitfähigen Schicht.

Die Zubereitung umfasst ein Bindemittel mit einer SiO₂-haltigen Bindemittelmatrix und einem Lösungsmittel. Die Bindemittelmatrix weist ein durch Silizium-Sauerstoff-Bindungen gebildetes Netzwerk auf und ist anorganisch vernetzt. Des Weiteren enthält die Zubereitung im Bindemittel dispergierten Kohlenstoff, insbesondere in Form von plättchenförmigen Graphit, als elektrisch leitfähiges Pigment. Der Anteil an elektrisch leitfähigem Pigment in der Zubereitung beträgt 10 bis 40 Gew.-%.

Gemäß einer Ausführungsform weist die Zubereitung einen Anteil an elektrisch leitfähigem Pigment von 10 bis 35 Gew.-%, bevorzugt von 12 bis 30 Gew.-% auf.

Das Lösungsmittel ist so gewählt, dass die Zubereitung druckfähig ist, ohne dass zusätzlich Mittel zur Steuerung der Rheologie hinzugegeben werden müssen. Insbesondere eignet sich die Zubereitung für die Verwendung als Druckpaste im Siebdruckverfahren.

Gemäß einer Ausführungsform beträgt die Viskosität der Zubereitung (gemessen bei einer Drehzahl von 140 l/min) 1 bis 20000 cP, bevorzugt 10 bis 10000 cP und besonders bevorzugt 100 bis 5000 cP. Die Viskositäten wurden mit einem Rotationsviskosimeter mit Kegel-Platten-Geometrie gemessen, wobei eine Torsionsscherverformung angelegt wurde, d.h. die Probe wurde zwischen Kegel und Platte deformiert und es resultierte eine definierte Scherung. Die Haltezeit bei jeder Drehzahl war 20 Sekunden.

Es handelt sich bei der Bindemittelmatrix um ein Sol-Gel-Netzwerk.

In einer Ausführungsform handelt es sich dabei um ein rein anorganisch vernetztes Sol-Gel-Netzwerk mit keinen oder nur wenigen organischen Gruppen. Die organischen Gruppen sind in dieser Ausführungsform auf eine unvollständige Hydrolyse eines Tetraalkoxysilans zurückzuführen. Neben einer guten Haftung auf Glas- und Glaskeramiksubstraten weisen diese vorwiegend anorganischen Sol-Gel-Bindemittel eine hohe Temperaturstabilität auf.

Die Bindemittelmatrix kann jedoch auch organische Reste bzw. Gruppen enthalten, die kovalent an das Sol-Gel-Netzwerk gebunden sind. Das Sol-Gel-Bindemittel kann zudem ein anorganisch-organisches Hybridnetzwerk aufweisen.

Der anorganische Vernetzungsgrad beträgt 40 bis 90%. Als besonders vorteilhaft hat sich ein anorganischer Vernetzungsgrad von 50 bis 80% und besonders von 60 bis 80% herausgestellt.

In einer Ausführungsform der Erfindung enthält die Zubereitung ein Lösungsmittel mit einem Dampfdruck < 5 bar, einem Siedepunkt > 120°C und/oder einer Verdunstungszahl > 10. Insbesondere weist das Lösungsmittel einen Dampfdruck < 1 und bevorzugt < 0,1 bar, einen Siedepunkt > 150°C und bevorzugt > 200°C und/oder eine Verdunstungszahl, bevorzugt > 500 und bevorzugt > 1000 auf.

Als Lösungsmittel kann insbesondere ein Glykol, ein Glykolether, ein Terpineol und/oder Polyol verwendet werden. Besonders bevorzugt wird das Lösungsmittel ausgewählt aus der Gruppe gebildet von n-Butylacetat, Methoxybutylacetat, Butyldiglykol, Butyldiglykolacetat, Cyclohexanon, Diacetonalkohol, Diethylengykol, Dipropylenglykolmonomethylether, Dipropylenglykolmonobutylether, Dipropylenglykolmonopropylether, Propylenglykolmonobutylether, Propylenglykolmonopropylether, Propylenglykolmonoethylether, Ethoxypropylacatat, Hexanol, Methoxypropylacetat, Monoethylenglykol, Ethylpyrrolidon, , Propylenglykol, Propylenglykolmonomethylether, Gemische aus paraffinischen und naphtenischen Kohlenwasserstoffen, aromatische Kohlenwasserstoffgemische, Mischungen aromatischer, alkylierter Kohlenwasserstoffe, Gemische von n-, i- und cyclo-Aliphaten und Terpineol verwendet. Auch die Verwendung von Lösungsmittelgemischen ist möglich.

In einer Weiterbildung der Erfindung enthält die Zubereitung zusätzlich Additive und Hilfsstoffe wie Verlaufsmittel, Entschäumer, Entlüfter, Verdicker, Härter, Starter, Korrosionsinhibitoren, Haftvermittler, Oberflächenreaktanten (Surfactants) und/oder Dispergieradditive. Unter Dispergieradditiven werden dabei insbesondere solche Additive verstanden, die zu einer besseren Pigmentbenetzung führen und somit ein Absetzen der Pigmente verhindern, ohne die Rheologie der Zubereitung maßgeblich zu verändern. Die Additive und Hilfsstoffe wirken sich positiv auf die Homogenität der Pigmentverteilung aus.

Als Entschäumer werden in einer Ausführungsform der Erfindung mineralölbasierte Entschäumer, silkonfreie Entschäumer und/oder Entschäumer auf Silikonbasis, beispielsweise organisch modifizierte Siloxane, insbesondere Siloxan-Copolymere oder Polydimethylsiloxane verwendet.

Die Zubereitung ist insbesondere geeignet zur Verwendung als Druckpaste zur Beschichtung eines Substrates mittels eines Druckverfahrens. Besonders eignet sich die Zubereitung zur Verwendung als Druckpaste in einem Siebdruckverfahren.

Des Weiteren betrifft die Erfindung ein Substrat mit einer elektrisch leitfähigen Beschichtung, insbesondere herstellbar mit dem oben beschriebenen Verfahren. Die elektrisch leitfähige Beschichtung umfasst eine anorganisch vernetzte SiO₂-haltige-Matrix. Durch einen hohen Vernetzungsgrad der Matrix weist die Schicht eine hohe Temperaturstabilität sowie eine gute Kratzfestigkeit auf.

In der Matrix sind plättchenförmige Graphitpartikel als elektrisch leitfähigen Pigments dispergiert.
Bevorzugt beträgt der Anteil an elektrisch leitfähigen Pigmentpartikeln in der zur Herstellung der Beschichtung verwendeten Beschichtungsmasse, d.h. vor dem Trocknen der Beschichtungsmasse 10 bis 35 Gew.-%.

In einer Ausführungsform der Erfindung sind neben den plättchenförmigen Graphitpartikeln keine weiteren elektrisch leitfähigen Pigmente in der Beschichtung enthalten.

Unter einer SiO₂-haltigen Matrix im Sinne der Erfindung wird insbesondere eine Matrix verstanden, deren Netzwerk durch Silizium-Sauerstoff-Bindungen gebildet wird. Die Matrix kann rein anorganisch sein oder sie kann organische Reste bzw. Gruppen aufweisen, die an Siliziumatome des Netzwerks gebunden sind.

Bei der Matrix handelt es sich um eine Sol-Gel-Matrix bzw. ein Sol-Gel-Netzwerk. Besonders temperaturstabile und kratzresistente Beschichtungen können dabei erhalten werden, da die Sol-Gel-Matrix einen anorganischen Vernetzungsgrad von 40 bis 90%, bevorzugt 50 bis 80% und besonders bevorzugt von 60 bis 80% aufweist.

Das erfindungsgemäß beschichtete Substrat bzw. die Beschichtung weist auf Grund der räumliche Anordnung der Graphitplättchen in der Matrix, d.h. vorwiegend zur Ausrichtung der Oberflächen der Graphitplättchen in Richtung der Substratoberfläche, trotz des relativ geringen Anteils an elektrisch leitfähigem Pigment eine gute elektrische Leitfähigkeit auf. Insbesondere weist das erfindungsgemäß beschichtete Substrat einen Flächenwiderstand von 5 bis 1000 Ohm/square, bevorzugt 10 bis 500 Ohm/square, besonders bevorzugt 20 bis 200 Ohm/square auf.

Gemäß einer Ausführungsform der Erfindung weist die Beschichtung (nach dem Trocknen) einen Anteil an elektrisch leitfähigem Pigment von 20 bis 80 Gew.-%, bevorzugt von 30 bis 70 Gew.-%, besonders bevorzugt von 40 bis 60 Gew.-% auf. Dabei kann durch Erhöhung des Graphitanteils die elektrische Leitfähigkeit der Beschichtung noch weiter erhöht werden.

Weiterhin kann die elektrische Leitfähigkeit der Beschichtung auch über deren Schichtdicke eingestellt werden. Bevorzugt beträgt die Schichtdicke der Beschichtung 5 bis 25 Mikrometer, besonders bevorzugt 5 bis 20 Mikrometer und ganz besonders bevorzugt 5 bis 15 Mikrometer. Dabei kann durch eine relativ hohe Schichtdicke beispielsweise eine hohe elektrische Leitfähigkeit einer Beschichtung erreicht werden, welche (innerhalb des erfindungsgemäßen Rahmens) einen relativ niedrigen Anteil an leitfähigem Pigment aufweist.

Ein weiterer Parameter zur Beeinflussung der elektrischen Leitfähigkeit der Beschichtung besteht in der Größe der verwendeten elektrisch leitfähigen Graphitpartikel. Mit steigender Größe steigt auch die elektrische Leitfähigkeit der Beschichtung, jedoch hat sich die Verwendung zu großer Partikel als nachteilig bei der Herstellung, insbesondere bei der Homogenisierung von Graphitplättchen und SiO₂-haltiger-Matrix, herausgestellt.

In einer vorteilhaften Ausgestaltung handelt es sich bei dem elektrisch leitfähigen Pigment um plättchenförmige Graphitpartikel mit einer Größe d90 im Bereich von 1 bis 100 µm, bevorzugt im Bereich von 2 bis 50 µm und besonders bevorzugt im Bereich von 3 bis 25 µm. Durch diese Größe kann eine hohe elektrische Leitfähigkeit der Beschichtung erreicht werden. Gleichzeitig sind die Graphitplättchen noch klein genug, dass eine homogene Verteilung in der Matrix gewährleistet ist. Eine Weiterbildung sieht dabei vor, dass die Beschichtung zumindest zwei Fraktionen an plättchenförmigen Graphitpartikel mit unterschiedlichen Größen d90 enthält.

Die Beschichtung ist dauerhaft stabil gegenüber Temperaturen zumindest 300°C, besonders bevorzugt gegenüber Temperaturen bis zu 500°C. Die Stabilität gegenüber einer Dauertemperaturbelastung mit Maximaltemperaturen von bis zu 500°C, insbesondere auch in Kombination mit einer hohen Kratzfestigkeit der Beschichtung, ermöglicht beispielsweise die Verwendung des beschichteten Substrates als Kochfeld.

In einer weiteren Ausgestaltung weist die Beschichtung eine Kratzfestigkeit von 500 bis 1000 g auf. Eine Weiterbildung der Erfindung sieht zudem vor, dass die Beschichtung zusätzlich anorganische Nanopartikel enthält. Hierdurch kann die Kratzfestigkeit der Beschichtung nochmals gesteigert werden. Gleichzeitig erhöht sich jedoch der Widerstand der Beschichtung, da die Nanopartikel die Anordnung der Graphitplättchen in der Matrix beeinflusst. Daher ist die Zugabe von Nanopartikeln insbesondere dann vorteilhaft, wenn eine hohe Kratzfestigkeit der Beschichtung neben der Leitfähigkeit im Vordergrund steht, beispielsweise bei beschichteten Substraten, die hohen mechanischen Beanspruchungen ausgesetzt sind.

Durch Wahl der Nanopartikel kann die Beschichtung dabei optimal an die jeweiligen Anforderungen angepasst werden. So können sphärische Nanopartikel, irregulär geformte Nanopartikel, beispielsweise in kolloidaler Form aus wässrigen Dispersionen oder flammpyrolytisch hergestellte Nanopartikel enthalten. Die Herstellung der Nanopartikel kann über Mahlprozesse, Aerosolverfahren wie z.B. Flammenhydrolyse, Sprühpyrolyse, Fällungsreaktionen, Sol-Gel-Reaktionen, Stöber-Prozesse, Plasmaverfahren oder Hydrothermal-Prozesse erfolgen.

Eine Ausführungsform der Erfindung sieht vor, dass in der Beschichtung Nanopartikel aus oxidischen Materialien wie TiO₂ (Anatas und/oder Rutil), ZrO₂ (amorpher, monokline und/oder tetragonale Phase), Ca oder Y₂O₃ dotiertes ZrO₂, MgO dotiertes ZrO₂, CeO₂, Gd₂O₃ dotiertes CeO₂, Y dotiertes ZrO₂, SiO₂, B₂O₃, Al₂O3 (α,-, γ- oder amorphe Form), SnO₂, ZnO, Bi₂O₃, Li₂O, K₂O, SrO, NaO, CaO, BaO, La₂O₃ und/oder HfO₂, Böhmit, Andalusit, Mullit und deren Mischoxide verwendet werden. Bevorzugt werden SiO₂-haltige Nanopartikel verwendet.

Bei dem Substrat handelt es sich um ein wärmebeständiges Material, insbesondere Glas, Glaskeramik, Metall, Legierungen oder ein entsprechend wärmestabiler Kunststoff. Bevorzugt handelt es sich bei dem Substrat um eine Glaskeramik. Das Substrat kann dabei beschichtet sein. In einer Ausführungsform weist das Substrat neben der elektrisch leitfähigen Beschichtung zumindest eine weitere Beschichtung auf. Gemäß einer Ausführungsform sind zwischen der Substratoberfläche und der elektrisch leitenden Beschichtung weitere Schichten angeordnet. Bevorzugt umfassen diese Schichten Dekor- und/oder Versiegelungsschichten. Es können auch mehrere Schichten zusätzlich zu der elektrisch leitfähigen Beschichtung auf der Ober- und/oder Unterseite des Substrates aufgebracht sein. Insbesondere kann das Substrat Dekor- und/oder silikonbasierte Versiegelungsschichten aufweisen.

Gemäß einer Ausführungsform wird als Substrat eine Lithium-Aluminium-Silikat (LAS)-Glaskeramik mit Hochquarzmischkristallen (HQMK) und/oder Keatitmischkristallen (KMK) als vorherrschende Kristallphase verwendet. Bevorzugt werden LAS-Glaskeramiken mit TiO₂, ZrO₂ und/oder SnO₂ als Keimbildner verwendet. Bevorzugt weisen die verwendeten Glaskeramiken einen Kristallphasengehalt von 50 bis 85%, bevorzugt von 60 bis 80% und ganz besonders bevorzugt von 64 bis 77% auf. In einer vorteilhaften Ausgestaltung dieser Ausführungsform weisen die Substrate weniger als 1000 ppm, bevorzugt weniger als 500 ppm und ganz besonders bevorzugt weniger als 200 ppm Arsen und/oder Antimon auf. Gemäß einer Ausgestaltung ist die verwendete Glaskeramik frei von Arsen und Antimon.

Insbesondere handelt es sich bei der Glaskeramik um eine transparente Glaskeramik.

Das elektrisch leitfähig beschichtete Substrat kann als Kochfeld verwendet werden, insbesondere wenn es sich bei dem Substrat um eine Glaskeramik handelt.
Die elektrisch leitende Beschichtung kann dabei sowohl im Kaltbereich des Kochfeldes, beispielsweise im Displaybereich als auch im Heißbereich, d.h. im Kochzonenbereich aufgebracht sein.

Insbesondere kann das elektrisch beschichtete Substrat als Touchsensor, Überlaufsensor, elektrisches Feld zur Abschirmung oder als Teil einer Beleuchtungseinrichtung verwendet werden.

### Detaillierte Beschreibung der Erfindung

Nachfolgend wird die vorliegende Erfindung an Hand von Figuren sowie an Hand von Ausführungsbeispielen näher beschrieben.

### Kurzbeschreibung der Figuren

Es zeigen:
Fig. 1 eine schematische Darstellung eines Ausführungsbeispiels des erfindungsgemäßen Herstellungsverfahrens, bei dem ein Sol-Gel-Bindemittel bereit gestellt wird,
Fig. 2 eine schematische Darstellung einer Ausführungsform eines erfindungsgemäß beschichteten Substrates,
Fig. 3 eine schematische Darstellung einer weiteren Ausführungsform eines erfindungsgemäß beschichteten Substrates, wobei die Beschichtung zusätzlich Nanopartikel enthält,
Fig. 4 eine schematische Darstellung einer dritten Ausführungsform eines erfindungsgemäß beschichteten Substrates, wobei zwischen dem Substrat und der elektrisch leitfähigen Beschichtung eine Dekor- und eine Versiegelungsschicht angeordnet sind,
Fig. 5 die DSC- und TG-Kurven zweier Ausführungsbeispiele der erfindungsgemäßen, elektrisch leitfähigen Beschichtung,
Fig. 6 die Schichtdicken verschiedener Ausführungsbeispiele der erfindungsgemäßen, elektrisch leitfähigen Beschichtung in Abhängigkeit vom Graphitanteil in der Beschichtung sowie der Einbrenntemperatur,
Fig. 7 den Flächenwiderstand der elektrisch leitfähigen Beschichtung verschiedener Ausführungsbeispiele der erfindungsgemäßen, elektrisch leitfähigen Beschichtung in Abhängigkeit vom Graphitanteil in der Beschichtung sowie der Einbrenntemperatur,
Fig. 8a bis 8c den Widerstand verschiedener Ausführungsbeispiele der erfindungsgemäßen, elektrisch leitfähigen Beschichtung gemäß Scratch-Test in Abhängigkeit von der Einbrandtemperatur und dem verwendeten Gewicht
Fig. 9 eine lichtmikroskopische Aufnahme einer erfindungsgemäßen, elektrisch leitfähigen Beschichtung auf der Oberfläche eines Glaskeramiksubstrates nach einem Scratch-Test und
Fig. 10 eine lichtmikroskopische Aufnahme einer erfindungsgemäßen, elektrisch leitfähigen Beschichtung auf einem Schichtverbund aus Sol-Gel-basierter Schicht und Versiegelungsschicht nach einem Scratch-Test.

### Detaillierte Beschreibung der Figuren

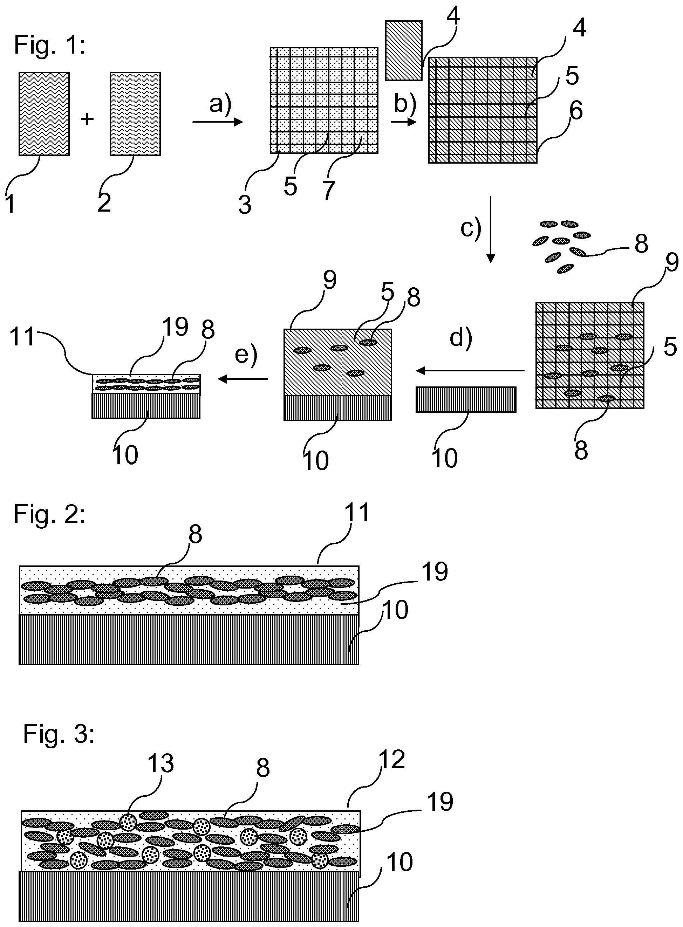

Fig. 1 zeigt schematisch eine Ausführungsform des Herstellungsverfahrens, bei der zunächst ein Sol-Gel-Bindemittel durch Hydrolyse hergestellt wird. In Schritt a) wird ein Monomer 1 mit einer wässrigen Lösung 2 vereint. Hierdurch bildet sich das Hydrolysat 3 mit einem anorganisch vernetzten Sol 5 als Bindemittelmatrix sowie einen niedrig siedenden Alkohol als flüssiges Kondensationsprodukt 7.

In Schritt b) erfolgt ein Lösungsmittelaustausch. Hierzu wird das Hydrolysat 3 mit einem Lösungsmittel 4 versetzt. Das Lösungsmittel 4 weist dabei einen höheren Siedepunkt auf als das flüssige Kondensationsprodukt 7, so dass das Kondensationsprodukt 7 beispielsweise destillativ entfernt werden kann (nicht gezeigt).

In das lösungsmittelgetauschte Hydrolysat, d.h. das Bindemittel 6 mit dem Lösungsmittel 4 werden nun in Schritt c) plättchenförmige Graphitteilchen 8 als elektrisch leitfähiges Pigment dispergiert. Um eine homogene Verteilung der Graphitpartikel 8 zu gewährleisten, werden diese unter Rühren zum Bindemittel 6 gegeben, so dass die Beschichtungsmasse 9 erhalten wird. Die Beschichtungsmasse 9 enthält das anorganisch vernetzte Sol 5 sowie darin homogen verteilt die plättchenförmigen Graphitpartikel 8 als elektrisch leitfähiges Pigment. Weiterhin enthält die Beschichtungsmasse 9 das Lösungsmittel 4. Hierdurch kann die Beschichtungsmasse im Schritt d) beispielsweise durch ein Druckverfahren, insbesondere durch Siebdruck, auf ein Substrat 10 aufgebracht werden. Dabei erfolgt der Auftrag der Beschichtungsmasse 9 auf das Substrat 10 lateral strukturiert, d.h. nicht vollflächig (nicht dargestellt).

Nachfolgend wird das mit der Beschichtungsmasse 9 versehene Substrat 10 getrocknet (Schritt e)). Hierdurch wird das Lösungsmittel 4 entfernt und es bildet sich die elektrisch leitfähige Beschichtung 11 aus. Die plättchenförmigen Graphitpartikel sind dabei in einer Sol-Gel-Matrix 19 eingebettet. Während des Trocknungsprozesses erfolgt eine weitere Vernetzung der Sol-Gel-Matrix 5, so dass die Sol-Gel-Matrix 19 der getrockneten Beschichtung einen höheren Vernetzungsgrad aufweist als die Sol-Gel-Matrix der Beschichtungsmasse 9.

Fig. 2 zeigt schematisch einen Ausschnitt aus dem mit der elektrisch leitfähigen Beschichtung 11 versehenen Substrat 10. Das anorganisch vernetzte Sol-Gel 19 dient als Matrix für die plättchenförmigen Graphitpartikel 8, die homogen in der Matrix 19 verteilt sind.

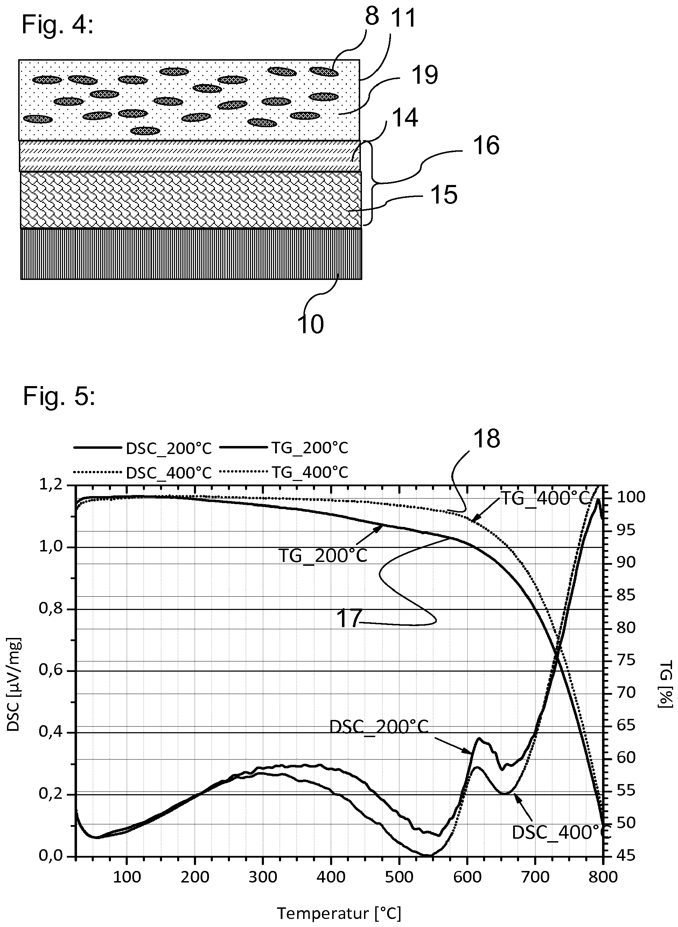

Fig. 3 zeigt schematisch einen Ausschnitt aus einer weiteren Ausführungsform der Erfindung. Die auf dem Substrat 10 aufgebrachte elektrisch leitfähige Beschichtung 12 weist in der Matrix neben den elektrisch leitfähigen Pigmenten anorganische Nanopartikel 13 auf. Diese führen zu einer Erhöhung der Kratzfestigkeit der Beschichtung 12. Fig. 4 zeigt schematisch eine Weiterbildung des erfindungsgemäß beschichteten Substrates 10. Hier ist die elektrisch leitfähige Beschichtung 11 nicht unmittelbar auf der Oberfläche des Substrates 10 aufgebracht, sondern zwischen Substrat 10 und elektrisch leitfähiger Beschichtung 11 befindet sich ein Schichtverbund 16, bestehend aus einer Sol-Gel-basierenden Dekorschicht 1 und einer silikonbasierten Versiegelungsschicht 14. Die elektrisch leitfähige Beschichtung 11 ist in dieser Ausführungsform auf der Versiegelungsschicht 14 angeordnet.

Fig. 5 zeigt die DSC- und TG-Kurven zweier beschichteter Substrate 17 und 18. Die beschichteten Substrate 17 und 18 unterscheiden sich dadurch, dass bei der Herstellung des beschichteten Substrates 18 nach der Trocknung der elektrisch leitenden Beschichtung 11 diese zusätzlich bei einer Temperatur von 400°C eingebrannt wurde.
Beide beschichteten Substrate 17 und 18 zeigen dabei eine hohe Stabilität gegenüber Temperaturbelastungen von mindestens 500°C auf. Ab Temperaturen von 550°C zeigt der Verlauf beider TG-Kurven eine deutliche Abnahme der Masse an. Dies ist in beiden Fällen darauf zurück zu führen, dass ab ca. 550°C eine Zersetzung der organischen Reste des Bindemittels erfolgt.

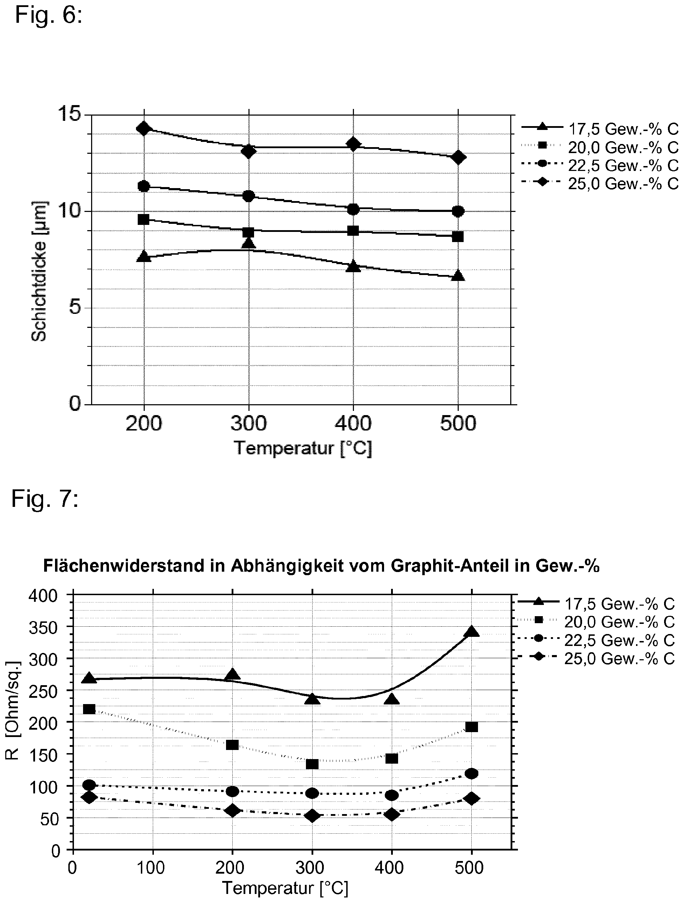

Fig. 6 zeigt die Schichtdicken der elektrisch leitfähigen Beschichtung in Abhängigkeit vom jeweiligen Graphitgehalt (bezogen auf die Beschichtungsmasse vor der Trocknung) und in Abhängigkeit von der Einbrandtemperatur. Die Schichtdicken wurden mit einem taktilen Profilometer mit Diamantnadel bestimmt. Unabhängig vom Graphitgehalt nimmt die Schichtdicke mit zunehmender Einbrandtemperatur ab, d.h. die Beschichtung wird mit steigender Einbrandtemperatur zunehmend verdichtet.

Fig. 7 zeigt den Flächenwiderstand der elektrisch leitfähigen Schicht in Abhängigkeit vom jeweiligen Graphitgehalt (bezogen auf die Beschichtungsmasse vor der Trocknung) sowie der Einbrandtemperatur.

Der Flächenwiderstand der elektrisch leitfähigen Beschichtung wurde mit einem 4-Punkt Messgerät MR-1 der Firma Schuetz Messtechnik bestimmt. Hierbei wurde zunächst der Widerstand R einer vollflächigen Schicht mit einer Fläche von 22^{∗}28 cm² unter Annahme des Formfaktors XL gemessen. Anschließend wurde dieser Wert mit dem Faktor π/ln2 multipliziert und somit der Flächenwiderstand in [Ω/square] erhalten.

Der Flächenwiderstand ist dabei sowohl abhängig vom Graphitanteil wie auch von der Einbrenntemperatur. So bedingt ein hoher Graphitanteil und somit ein hoher Anteil an elektrisch leitfähigem Material in der Beschichtung eine hohe elektrische Leitfähigkeit und damit einen geringen Flächenwiderstand. Weiterhin sinkt der Flächenwiderstand innerhalb der gezeigten Einbrandtemperaturen von 200°C bis 400°C, da die Schicht durch das Einbrennen verdichtet wird. Bei einer Einbrandtemperatur von 500°C steigt jedoch der Flächenwiderstand an. Dies kann durch die zunehmende Bildung von Mikrorissen in der Beschichtung bei hohen Temperaturen erklärt werden.

Somit stehen mit dem Graphitgehalt sowie der Einbrenntemperatur zwei voneinander unabhängige Parameter zur Einstellung des gewünschten Flächenwiderstandes bzw. der gewünschten elektrischen Leitfähigkeit zur Verfügung.

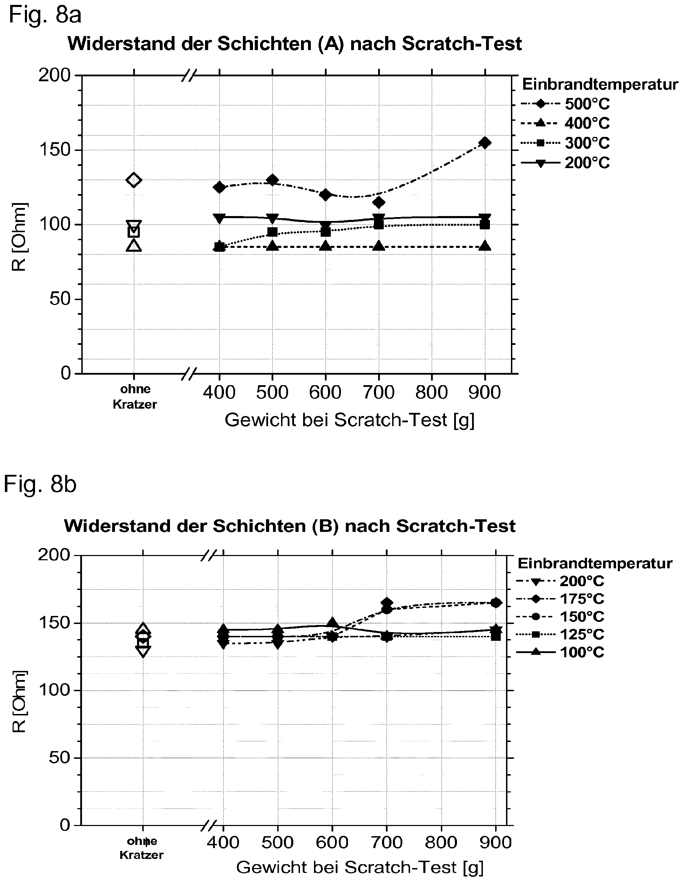

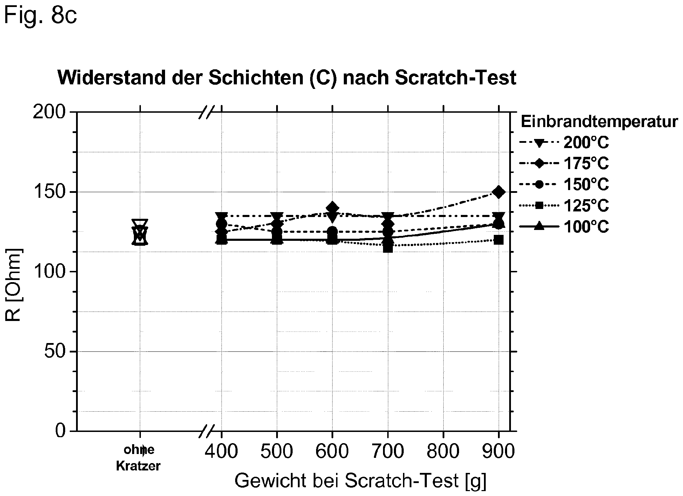

Die Fig. 8a bis 8c zeigen den elektrischen Widerstand verschiedener Ausführungsbeispiele A bis C, bei denen die Beschichtung eine Sol-Gel-Matrix aufweist, nach Scratch-Test als Maß für die Kratzfestigkeit in Abhängigkeit vom beim Test verwendeten Gewicht sowie in Abhängigkeit von der Trocknungs- bzw. Einbrandtemperatur der jeweiligen elektrisch leitfähigen Beschichtung.

Die Ausführungsbeispiele A bis C unterscheiden sich in den verwendeten Monomeren für das Sol-Gel-Bindemittel und im verwendeten Lösungsmittel bzw. des Lösungsmittelgehaltes.

So wird in Ausführungsbeispiel A als Monomer Tetraethoxysilan (TEOS) verwendet, was zu einem rein anorganisch vernetzten Sol-Gel-Netzwerk mit einem sehr geringen Anteil an organischen Gruppen führt, während das Hydrolysat in den Ausführungsbeispielen B und C durch die Verwendung von Methyltriethoxysilan (MTEOS) ein anorganisch-organisches Hybridnetzwerk aufweist.

Die Bestimmung der Kratzfestigkeit erfolgte mit einem Scratch Hardness Tester 413 der Firma Erichsen. Als Messspitze wurde eine Wolframcarbid-Spitze mit einem Durchmesser von 1 mm verwendet. Die Kratzfestigkeit der Beschichtung liegt im Bereich von 500 bis 1000 g, d.h. 5 bis 10 N.

Erfindungsgemäß wird die Kratzfähigkeit dabei wie folgt definiert: Wird die elektrische Leitfähigkeit der zu testenden leitfähigen Beschichtung durch den Kratztest bzw. den durchgeführten Kratzvorgang mit dem entsprechenden Gewicht nicht beeinträchtigt, so gilt die Beschichtung in Bezug auf dieses Gewicht als kratzfest. Der Widerstand der leitfähigen Beschichtung nach Durchführung des Scratch-Tests wurde mit einem Multimeter mit einem Abstand der beiden Messspitzen von 0,5 cm gemessen.

Die Schichten aller Ausführungsbeispiele A bis C zeigen bereits bei geringen Einbrandtemperaturen eine hohe Kratzfestigkeit. Diese kann durch höhere Einbrandtemperaturen bis 400°C auf Grund der erfolgenden Verdichtung noch gesteigert werden, während eine Einbrandtemperatur von 500°C eine geringere Kratzresistenz zur Folge hat. Eine Erklärung hierfür könnte in der zunehmenden Bildung von Mikrorissen liegen.

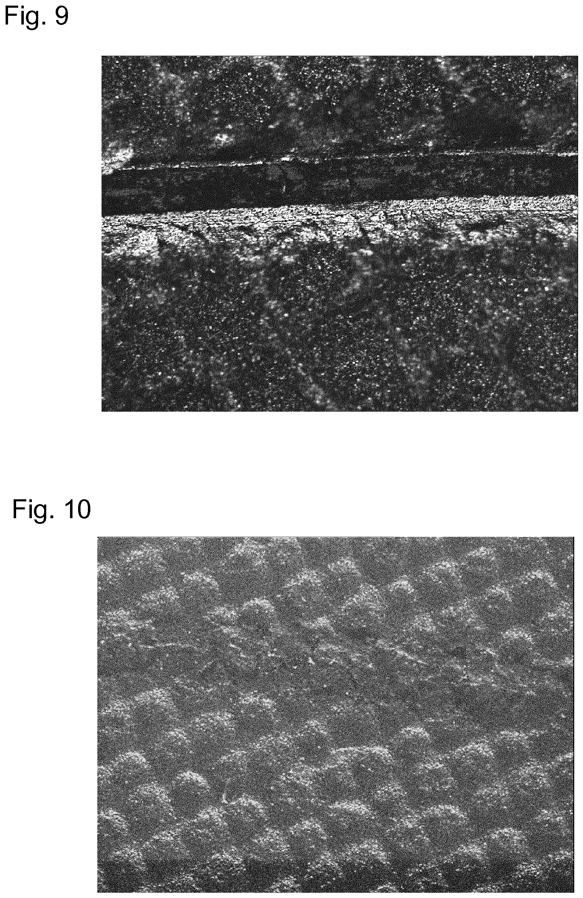

Fig. 9 zeigt Lichtmikroskopaufnahmen einer leitfähigen Beschichtung auf a) einer Glaskeramikoberfläche und b) auf einem Schichtverbund aus Sol-Gel-basierter Schicht und Versiegelungsschicht jeweils nach Durchführung des Scratch-Tests mit einem Gewicht von 900 g. Überraschenderweise zeigt sich, dass die Kratzfähigkeit der elektrisch leitfähigen Beschichtung, die auf den Schichtverbund aufgedruckt wurde (siehe auch Fig. 4), deutlich höher ist als die Kratzfähigkeit einer elektrisch leitfähigen Beschichtung, die direkt auf die Glaskeramikoberfläche (siehe auch Fig. 2) gedruckt wurde. Dies lässt sich insbesondere mit der noppenartigen Oberflächenstruktur der Beschichtung mit "Bergen" und "Tälern" in Fig. 9b) erklären. Die noppenartige Struktur ist dabei auf das beim Siebdruck verwendete Sieb zurückzuführen. Durch diese Struktur werden beim Scratch-Test vorwiegend die "Berge" der Beschichtung beschädigt, während die "Täler" dagegen unversehrt bleiben.

### Ausführungsbeispiele

Bei den Ausführungsbeispielen A bis E wurde ein Sol-Gel-Bindemittel verwendet, bei den Ausführungsbeispielen F und G wurde ein Bindemittel mit einer Silikonharz-Bindemittelmatrix verwendet.

### Ausführungsbeispiel A

### a) Herstellung des Beschichtungsmaterials

Es werden 0,24 mol p-Toluolsulfonsäure in 6,48 mol Tetraethoxysilan (TEOS) gelöst und die Mischung mit 9,07 mol Wasser versetzt.

Nach abgeschlossener Sol-Gel-Reaktion werden 300 g des Hydrolysates 208 g Terpineol zugegeben. Anschließend wird das während der Sol-Gel-Reaktion entstandene niedrig siedende Lösungsmittel am Rotationsverdampfer entfernt.

25 g Graphit werden in 75 g Bindemittel dispergiert. Zusätzlich können noch 0,2 bis 0,5 g Entschäumer, beispielsweise ein Silikonöl zugegeben werden. Zunächst wird die flüssige Phase eingewogen, dann die plättchenförmigen Graphitpartikel als feste Phase zugegeben. Mit Hilfe eines Propellerrührers werden die Graphitpartikel bei einer Drehzahl von 300 bis 1500 min-1 in das Bindemittel eindispergiert. Dabei wird das Mischgut von oben nach unten angesaugt und eine axiale Strömung erzeugt.

### b) Herstellung der elektrisch leitfähigen Beschichtung

Das in a) hergestellte Beschichtungsmaterial wird mittels Siebdruck teilweise strukturiert auf das Substrat aufgedruckt. Anschließend wird das beschichtete Substrat 90 Minuten bei einer Temperatur von 200°C getrocknet und 90 Minuten bei Temperaturen zwischen 300 und 500°C eingebrannt.

### Ausführungsbeispiel B

### a) Herstellung des Beschichtungsmaterials

Es werden 0,13 p-Toluolsulfonsäure in 3,37 mol Methyltriethoxysilan (MTEOS) gelöst. Anschließend werden 0,84 mol Tetraethoxysilan (TEOS) zugegeben und die Mischung mit 4,71 mol Wasser versetzt.

Nach abgeschlossener Sol-Gel-Reaktion werden 300 g des Hydrolysates 132 g Terpineol und 33,0 g n-Butylacetat zugegeben. Anschließend wird das während der Sol-Gel-Reaktion entstandene niedrig siedende Lösungsmittel am Rotationsverdampfer entfernt.

25 g Graphit werden in 75 g Bindemittel dispergiert. Zusätzlich können noch 0,2 bis 0,5 g Entschäumer, beispielsweise ein Silikonöl zugegeben werden.
Zunächst wird die flüssige Phase eingewogen, dann die plättchenförmigen Graphitpartikel als feste Phase zugegeben. Mit Hilfe eines Propellerrührers werden die Graphitpartikel bei einer Drehzahl von 300 bis 1500 min-1 in das Bindemittel eindispergiert. Dabei wird das Mischgut von oben nach unten angesaugt und eine axiale Strömung erzeugt.

### b) Herstellung der elektrisch leitfähigen Beschichtung

Das in a) hergestellte Beschichtungsmaterial wird mittels Siebdruck teilweise strukturiert auf das Substrat aufgedruckt. Anschließend wird das beschichtete Substrat 90 Minuten bei einer Temperatur von 100°C bis 200°C getrocknet. Ein zusätzlicher Einbrand der Schichten ist nicht notwendig.

### Ausführungsbeispiel C

### a) Herstellung des Beschichtungsmaterials

Es werden 0,13 p-Toluolsulfonsäure in 3,37 mol Methyltriethoxysilan (MTEOS) gelöst. Anschließend werden 0,84 mol Tetraethoxysilan (TEOS) zugegeben und die Mischung mit 4,71 mol Wasser versetzt.

Nach abgeschlossener Sol-Gel-Reaktion werden 300 g des Hydrolysates 210 g Terpineol und 42,1 g n-Butylacetat zugegeben. Anschließend wird das während der Sol-Gel-Reaktion entstandene niedrig siedende Lösungsmittel am Rotationsverdampfer entfernt.

25 g Graphit werden in 75 g Bindemittel dispergiert. Zusätzlich können noch 0,2 bis 0,5 g Entschäumer, beispielsweise ein Silikonöl zugegeben werden.

Zunächst wird die flüssige Phase eingewogen, dann die plättchenförmigen Graphitpartikel als feste Phase zugegeben. Mit Hilfe eines Propellerrührers werden die Graphitpartikel bei einer Drehzahl von 300 bis 1500 min-1 in das Bindemittel eindispergiert. Dabei wird das Mischgut von oben nach unten angesaugt und eine axiale Strömung erzeugt.

### b) Herstellung der elektrisch leitfähigen Beschichtung

Das in a) hergestellte Beschichtungsmaterial wird mittels Siebdruck teilweise strukturiert auf das Substrat aufgedruckt. Anschließend wird das beschichtete Substrat 90 Minuten bei einer Temperatur von 100°Cbis 200°C getrocknet. Ein zusätzlicher Einbrand der Schichten ist nicht notwendig.

### Ausführungsbeispiel D: Herstellung eines Substrates mit einer elektrisch leitfähigen Beschichtung (anorganischorganische Bindemittel)

### a) Herstellung des Beschichtungsmaterials

Es werden 0,07 p-Toluolsulfonsäure in 2,13 mol Methyltriethoxysilan (MTEOS) gelöst. Anschließend werden 0,53 mol Tetraethoxysilan (TEOS) zugegeben und die Mischung mit 2,56 mol Wasser versetzt. Nach Beginn der Sol-Gel-Reaktion erwärmt sich das Gemisch auf eine Temperatur von > 50°C.

Nach abgeschlossener Sol-Gel-Reaktion werden zu 300 g des Hydrolysates 189 g Terpineol und 47,3 g n-Butylacetat gegeben. Anschließend wird das während der Sol-Gel-Reaktion entstandene niedrig siedende Lösungsmittel am Rotationsverdampfer entfernt.

25 g Graphit werden in 75 g Bindemittel dispergiert.

Zusätzlich können noch 0,2 bis 0,5 g Entschäumer, beispielsweise ein Silikonöl zugegeben werden. Zunächst wird die flüssige Phase eingewogen, dann die plättchenförmigen Graphitpartikel als feste Phase zugegeben. Mit Hilfe eines Propellerrührers werden die Graphitpartikel bei einer Drehzahl von 300 bis 1500 min-1 in das Bindemittel eindispergiert. Dabei wird das Mischgut von oben nach unten angesaugt und eine axiale Strömung erzeugt.

### b) Herstellung der elektrisch leitfähigen Beschichtung

Das in a) hergestellte Beschichtungsmaterial wird mittels Siebdruck teilweise strukturiert auf das Substrat aufgedruckt. Anschließend wird das beschichtete Substrat 90 Minuten bei einer Temperatur von 200°C getrocknet und 90 Minuten bei 400°C eingebrannt.

### Ausführungsbeispiel E: Herstellung eines Substrates mit einer elektrisch leitfähigen Beschichtung (anorganisches Bindemittel)

### a) Herstellung des Beschichtungsmaterials

Es werden 0,05 p-Toluolsulfonsäure in 1,26 mol Tetraethoxysilan (TEOS) gelöst und die Mischung mit 1,76 mol Wasser versetzt. Nach Beginn der Sol-Gel-Reaktion erwärmt sich das Gemisch auf eine Temperatur von > 50°C.

Nach abgeschlossener Sol-Gel-Reaktion werden 300 g des Hydrolysates 153 g Terpineol und 38,3 g n-Butylacetat zugegeben. Anschließend wird das während der Sol-Gel-Reaktion entstandene niedrig siedende Lösungsmittel am Rotationsverdampfer entfernt.

25 g Graphit werden in 75 g Bindemittel dispergiert. Zusätzlich können noch 0,2 bis 0,5 g Entschäumer, beispielsweise ein Silikonöl zugegeben werden.
Zunächst wird die flüssige Phase eingewogen, dann die plättchenförmigen Graphitpartikel als feste Phase zugegeben. Mit Hilfe eines Propellerrührers werden die Graphitpartikel bei einer Drehzahl von 300 bis 1500 min-1 in das Bindemittel eindispergiert. Dabei wird das Mischgut von oben nach unten angesaugt und eine axiale Strömung erzeugt, so dass die örtlich auftretenden Scherkräfte minimal sind.

### b) Herstellung der elektrisch leitfähigen Beschichtung

Das in a) hergestellte Beschichtungsmaterial wird mittels Siebdruck teilweise strukturiert auf das Substrat aufgedruckt. Anschließend wird das beschichtete Substrat 90 Minuten bei einer Temperatur von 200°C getrocknet und 90 Minuten bei 400°C eingebrannt.

### Ausführungsbeispiel F: Herstellung eines Substrates mit einer elektrisch leitfähigen Beschichtung (polyestermodifiziertes Silikonharz)

### a) Herstellung der Beschichtungsmasse

25 g Graphit werden in 75 g eines Bindemittels mit einem polyestermodifizierten Silikonharz als Bindemittelmatrix und einem Methoxypropylacetat/Xylol-Gemisch als Lösungsmittel (Silikoftal® HTL-3 der Evonik Industrie AG) mit Hilfe eines Propellerrührers bei einer Drehzahl von 300 bis 1500 min⁻¹ dispergiert. Dabei wird das Mischgut von oben nach unten angesaugt und eine axiale Strömung erzeugt.

### b) Herstellung der elektrisch leitfähigen Beschichtung

Die in Schritt a) hergestellte Beschichtungsmasse wird mittels Siebdruck teilweise strukturiert auf das Substrat aufgedruckt. Anschließend wird das beschichtete Substrat für 90 Minuten bei einer Temperatur von 200°C getrocknet. Nach dem Trocknen erfolgt ein Einbrand der Beschichtung, indem das beschichtete Substrat für 90 Minuten bei einer Temperatur von 400 °C erhitzt wird.

### Ausführungsbeispiel G: Herstellung eines Substrates mit einer elektrisch leitfähigen Beschichtung (epoxymodifiziertes Silikonharz)

### a) Herstellung der Beschichtungsmasse

25 g Graphit werden in 75 g eines Bindemittels mit einem epoxymodifizierten Silikonharz als Bindemittelmatrix (Silikopon® EF der Evonik Industrie AG) mit Hilfe eines Propellerrührers bei einer Drehzahl von 300 bis 1500 min⁻¹ dispergiert. Dabei wird das Mischgut von oben nach unten angesaugt und eine axiale Strömung erzeugt.

### b) Herstellung der elektrisch leitfähigen Beschichtung

Die in Schritt a) hergestellte Beschichtungsmasse wird mittels Siebdruck teilweise strukturiert auf das Substrat aufgedruckt. Anschließend wird das beschichtete Substrat für 90 Minuten bei einer Temperatur von 200°C getrocknet. Nach dem Trocknen erfolgt ein Einbrand der Beschichtung, indem das beschichtete Substrat für 90 Minuten bei einer Temperatur von 400 °C erhitzt wird.

## Patentansprüche

1. Verfahren zur Herstellung einer elektrisch leitfähigen Beschichtung auf einem Substrat, umfassend zumindest die folgenden Schritte:
- Bereitstellung eines Bindemittels, wobei das Bindemittel eine anorganisch vernetzte, SiO₂-basierte Bindemittelmatrix und ein organisches Lösungsmittel enthält, wobei das Bindemittel ein Sol-Gel-Bindemittel ist, das durch Hydrolyse zumindest eines Monomers hergestellt wird, wobei ein Alkohol gebildet wird und nachfolgend ein Austausch des gebildeten Alkohols gegen das organische Lösungsmittel erfolgt und wobei der anorganische Vemetzungsgrad des Bindemittelsdurch das Verhältnis von Wasser zu Monomer eingestellt wird und der anorganische Vernetzungsgrad der Bindemittelmatrix 40 bis 90%, bevorzugt 50 bis 80%, beträgt, wobei der anorganische Vernetzungsgrad mittels ²⁹Si-NMR bestimmt wird,
- Herstellung einer Beschichtungsmasse durch Dispergieren eines elektrisch leitfähigen Pigments im Bindemittel durch mechanische Konvektion, wobei der Anteil an leitfähigem Pigment 10 bis 40 Gew.-% beträgt und als elektrisch leitfähiges Pigment Kohlenstoff verwendet wird,
- teilweise strukturiertes Aufdrucken der Beschichtungsmasse auf dem Substrat,
- Trocknen der erhaltenen Beschichtung bei Temperaturen im Bereich von 20 bis 250°C,
wobei als elektrisch leitfähiges Pigment plättchenförmige Graphitpartikel verwendet werden.

2. Verfahren gemäß dem vorstehenden Anspruch, wobei als elektrisch leitfähiges Pigment plättchenförmige Graphitpartikel mit einer Partikelgröße d90 im Bereich von 1 bis 100 µm, bevorzugt im Bereich von 5 bis 50 µm und besonders bevorzugt im Bereich von 10 bis 25 µm verwendet werden und/oder der Anteil an elektrisch leitfähigem Pigment in der Beschichtungsmasse 10 bis 35 Gew.-%, bevorzugt 12 bis 30 Gew.-% beträgt.

3. Verfahren gemäß einem der vorstehenden Ansprüche, wobei nach dem Trocknen der erhaltenen Beschichtung bei Temperaturen im Bereich von 20 bis 250°C die Beschichtung bei Temperaturen im Bereich von 100 bis 500°C, bevorzugt bei Temperaturen im Bereich von 300 bis 400°C eingebrannt wird.

4. Verfahren gemäß Anspruch 3, **gekennzeichnet durch** zumindest eines der Merkmale
- als Monomere werden Metallalkoholate, bevorzugt Alkoxysilane und besonders bevorzugt Trialkoxy- und/oder Tetraalkoxysilane eingesetzt,
- die Herstellung des Sol-Gel-Bindemittels erfolgt durch Reaktion zumindest eines Monomers mit Wasser in Gegenwart eines Katalysators, bevorzugt in Gegenwart einer Säure als Katalysator,
- die Hydrolyse des Monomers erfolgt in Gegenwart von anorganischen Nanopartikeln,
- der anorganische Vernetzungsgrad der Bindemittelmatrix 60 bis 80%,
- das Lösungsmittel des Bindemittels weist einen Dampfdruck < 5 bar, bevorzugt < 1 bar, besonders bevorzugt < 0,1 bar, einen Siedepunkt > 120°C , bevorzugt > 150°C, besonders bevorzugt > 200°C und/oder eine Verdunstungszahl > 10, bevorzugt > 500, bevorzugt > 1000 auf,
- als Lösungsmittel wird ein Glykol, ein Glykolether, ein Terpineol und/oder Polyol verwendet.

5. Verfahren gemäß einem der vorstehenden Ansprüche 1 bis 4, wobei das Bindemittel als SiO₂-haltige Bindemittelmatrix ein Silikonharz, bevorzugt ein alkyl- und/oder arylmodifiziertes Silikonharz und besonders bevorzugt ein methyl- und/oder phenyl-modifiziertes Silikonharz enthält.

6. Zubereitung zum Auftrag einer elektrisch leitfähigen Beschichtung auf ein Substrat, umfassend ein Bindemittel mit einer anorganisch vemetzten, SiO₂-haltigen Bindemittelmatrix, wobei das Bindemittel ein Sol-Gel-Bindemittel ist und wobei der anorganische Vemetzungsgrad der Bindemittelmatrix 40 bis 90%, bevorzugt 50 bis 80%, beträgt, wobei der anorganische Vernetzungsgrad mittels ²⁹Si-NMR bestimmt wird,
sowie plättchenförmiges Graphit als elektrisch leitfähiges Pigment, wobei der Gehalt an elektrisch leitfähigem Pigment in der Zubereitung 10 bis 40 Gew.-% beträgt und das elektrisch leitfähige Pigment in der Bindemittelmatrix dispergiert ist.

7. Zubereitung gemäß Anspruch 6, mit zumindest einem der Merkmale:
- der Gehalt an elektrisch leitfähigem Pigment beträgt 10 bis 35 Gew.-%, bevorzugt 12 bis 30 Gew.-% und/oder
- als elektrisch leitfähiges Pigment sind plättchenförmige Graphitpartikel enthalten, welche Partikelgrößen d90 im Bereich von 1 bis 100 µm, bevorzugt im Bereich von 5 bis 50 µm und besonders bevorzugt im Bereich von 10 bis 25 µm aufweisen,
- die Bindemittelmatrix ist eine anorganische Sol-Gel-Bindemittelmatrix, wobei der anorganische Vernetzungsgrad der Sol-Gel-Bindemittelmatrix vorzugsweise 40 bis 90%, besonders bevorzugt 50 bis 80% beträgt.

8. Substrat mit einer elektrisch leitfähigen, temperaturstabilen Beschichtung, wobei die Beschichtung eine anorganisch vernetzte, SiO₂-haltige Sol-Gel-Matrix mit einem anorganischen Vernetzungsgrad von 40 bis 90%, bevorzugt 50 bis 80%, , wobei der anorganische Vernetzungsgrad mittels ²⁹Si-NMR bestimmt wird,
und plättchenförmige Graphitpartikel als elektrisch leitfähiges Pigment enthält, und wobei die plättchenförmigen Graphitpartikel in der Matrix dispergiert sind.

9. Substrat gemäß Anspruch 8, wobei die Beschichtung als leitfähiges Pigment plättchenförmige Graphitpartikel enthält, wobei die Graphitpartikel eine Größe d90 im Bereich von 1 bis 100 µm, bevorzugt im Bereich von 2 bis 50 µm und besonders bevorzugt im Bereich von 3 bis 25 µm aufweisen.

10. Substrat gemäß einem der vorstehenden Ansprüche 8 oder 9, **gekennzeichnet durch** zumindest eines der Merkmale:
- der Anteil an elektrisch leitfähigem Pigment in der Beschichtung beträgt 20 bis 80 Gew.-%,
- die Beschichtung weist einen Flächenwiderstand von 5 bis 1000 Ohm/square, bevorzugt 10 bis 500 Ohm/square, besonders bevorzugt 20 bis 200 Ohm/square auf,
- die Schichtdicke der Beschichtung beträgt 5 bis 25 Mikrometer, bevorzugt 5 bis 20 Mikrometer und besonders bevorzugt 5 bis 15 Mikrometer,
- die Beschichtung enthält anorganische Nanopartikel, bevorzugt oxidische Nanopartikel, besonders bevorzugt SiO₂-Nanopartikel

11. Substrat gemäß einem der vorstehenden Ansprüche 8 bis 10, wobei als Substrat eine LAS-Glaskeramik mit Hochquarz-Mischkristallen und/oder Keatitmischkristallen als vorherrschende Kristallphase verwendet wird und/oder die Glaskeramik transparent ist

12. Verwendung des beschichteten Substrats gemäß einem der Ansprüche 8 bis 11
- als Kochfeld, Ofenscheiben, Kaminsichtscheiben oder Bedienblenden für Haushaltsgeräte, wobei die elektrisch leitfähige Beschichtung im Displaybereich und/oder im Kochbereich der Kochfelder angeordnet ist,
- als Touchsensor, Überlaufsensor, elektrisches Feld zur Abschirmung oder als Teil einer Beleuchtungseinrichtung.

## Claims

1. A method for producing an electrically conductive coating on a substrate, comprising at least the steps of:
- providing a binder, said binder comprising an inorganically crosslinked SiO₂-based binder matrix and an organic solvent, wherein the binder is a sol-gel binder which is prepared by hydrolysis of at least one monomer thereby generating an alcohol and subsequently replacing the generated alcohol against the organic solvent, and wherein the degree of inorganic crosslinking of the binder is adjusted by the ratio of water to monomer and the inorganic degree of crosslinking of the binder matrix is 40 to 90 %, preferably 50 to 80 %, the degree of inorganic crosslinking being determined by ²⁹Si-NMR;
- preparing a coating compound by dispersing an electrically conductive pigment in the binder by mechanical convection, wherein the fraction of conductive pigment is 10 to 40 wt% and carbon is used as the electrically conductive pigment;
- printing the coating compound onto the substrate in a partially patterned manner;
- drying the obtained coating at temperatures in the range from 20 to 250 °C;
wherein platelet-shaped graphite particles are used as the electrically conductive pigment.

2. The method according to the preceding claim, wherein platelet-shaped graphite particles with a particle size d90 in the range from 1 to 100 µm, preferably in the range from 5 to 50 µm, and most preferably in the range from 10 to 25 µm are used as the electrically conductive pigment, and/or wherein the fraction of electrically conductive pigment in the coating compound is from 10 to 35 wt%, preferably from 12 to 30 wt%.

3. The method according to any one of the preceding claims, wherein after drying the obtained coating at temperatures in the range from 20 to 250 °C, the coating is fired at temperatures in the range from 100 to 500 °C, preferably at temperatures in the range from 300 to 400 °C.

4. The method according to claim 3, **characterized by** at least one of the following features:
- metal alkoxides, preferably alkoxysilanes and particularly preferably trialkoxy- and/or tetraalkoxysilanes are used as monomers;
- the sol-gel binder is prepared by reacting at least one monomer with water in the presence of a catalyst, preferably in the presence of an acid as a catalyst;
- hydrolysis of the monomer occurs in the presence of inorganic nanoparticles;
- the degree of inorganic crosslinking of the binder matrix is 60 to 80 %;
- the solvent of the binder has a vapour pressure of < 5 bar, preferably < 1 bar, more preferably < 0.1 bar, a boiling point of > 120 °C, preferably > 150 °C, more preferably > 200 °C, and/or an evaporation number > 10, preferably > 500, preferably > 1000;
- a glycol, a glycol ether, a terpineol, and/or polyol is used as the solvent.

5. The method according to any one of the preceding claims 1 to 4, wherein the binder in the form of an SiO₂-containing binder matrix contains a silicone resin, preferably an alkyl- and/or aryl-modified silicone resin, and most preferably a methyl- and/or phenyl-modified silicone resin.

6. A preparation for applying an electrically conductive coating onto a substrate, comprising a binder having an inorganically crosslinked SiO₂-containing binder matrix, wherein the binder is a sol-gel binder and wherein the degree of inorganic crosslinking of the binder matrix is 40 to 90 %, preferably 50 to 80 %, wherein the degree of inorganic crosslinking is determined by ²⁹Si-NMR; and
platelet-shaped graphite as an electrically conductive pigment, wherein the content of electrically conductive pigment in the preparation is from 10 to 40 wt% and the electrically conductive pigment is dispersed in the binder matrix.

7. The preparation according to claim 6, having at least one of the following features:
- the content of electrically conductive pigment is from 10 to 35 wt%, preferably from 12 to 30 wt%; and/or
- platelet-shaped graphite particles having particle sizes d90 in the range from 1 to 100 µm, preferably in the range from 5 to 50 µm, and most preferably in the range from 10 to 25 µm are contained as the electrically conductive pigment;
- the binder matrix is an inorganic sol-gel binder matrix, wherein the degree of inorganic crosslinking of the sol-gel binder matrix is preferably from 40 to 90 %, most preferably from 50 to 80 %.

8. A substrate with an electrically conductive temperature-stable coating, wherein the coating comprises an inorganically crosslinked SiO₂-containing sol-gel matrix with a degree of inorganic crosslinking from 40 to 90 %, preferably from 50 to 80 %, wherein the degree of inorganic crosslinking is determined using ²⁹Si NMR; and
platelet-shaped graphite particles as an electrically conductive pigment; and wherein the platelet-shaped graphite particles are dispersed in the matrix.

9. The substrate according to claim 8, wherein the coating contains platelet-shaped graphite particles as the conductive pigment, wherein the graphite particles have a size d90 in the range from 1 to 100 µm, preferably in the range from 2 to 50 µm, and most preferably in the range from 3 to 25 µm.

10. The substrate according to any one of the preceding claims 8 or 9, **characterized by** at least one of the following features:
- the fraction of electrically conductive pigment in the coating is from 20 to 80 wt%;
- the coating has a sheet resistance of 5 to 1000 ohms/square, preferably 10 to 500 ohms/square, most preferably 20 to 200 ohms/square;
- the layer thickness of the coating is 5 to 25 micrometres, preferably 5 to 20 micrometres, and most preferably 5 to 15 micrometres;
- the coating contains inorganic nanoparticles, preferably oxidic nanoparticles, most preferably SiO₂ nanoparticles.

11. The substrate according to any one of the preceding claims 8 to 10, wherein an LAS glass ceramic with high quartz solid solution and/or keatite solid solution as the predominant crystal phase is used as a substrate; and/or wherein the glass ceramic is transparent.

12. Use of the coated substrate according to any one of claims 8 to 11
- as a cooktop, for oven windows, fireplace windows, or control panels for household appliances, wherein the electrically conductive coating is arranged in the display area and/or in the cooking area of the cooktops;
- as a touch sensor, overflow sensor, electric field for shielding, or as part of a lighting device.

## Revendications

1. Procédé de production d'un revêtement électro-conducteur sur un substrat, comprenant au moins les étapes suivantes consistant à :
- mettre à disposition un liant, ledit liant contenant une matrice de liant à base de SiO₂, ayant subi une réticulation inorganique, et un solvant organique, ledit liant étant un liant sol-gel, qui est produit par hydrolyse d'au moins un monomère, où un alcool est formé et puis un remplacement de l'alcool formé par le solvant organique est réalisé et le degré de réticulation inorganique du liant est ajusté grâce au rapport eau sur monomère et le degré de réticulation inorganique de la matrice de liant est de 40 à 90 %, de préférence de 50 à 80 %, le degré de réticulation inorganique étant déterminé par RMN du ²⁹Si,
- produire une masse de revêtement en dispersant un pigment électro-conducteur dans le liant par convection mécanique, la proportion de pigment conducteur étant de 10 à 40 % en poids et le carbone étant utilisé comme pigment électro-conducteur,
- imprimer de manière partiellement structurée la masse de revêtement sur le substrat,
- sécher le revêtement obtenu à des températures comprises dans la plage de 20 à 250°C,
des particules de graphite lamellaires étant utilisées comme pigment électro-conducteur.

2. Procédé selon la revendication précédente, dans lequel des particules de graphite lamellaires d'une taille de particules d90 dans la plage de 1 à 100 µm, de préférence dans la plage de 5 à 50 µm et de manière particulièrement préférée dans la plage de 10 à 25 µm sont utilisées comme pigment électro-conducteur et/ou la proportion de pigment électro-conducteur dans la masse de revêtement est de 10 à 35 % en poids, de préférence de 12 à 30 % en poids.

3. Procédé selon l'une quelconque des revendications précédentes, dans lequel, après séchage du revêtement obtenu à des températures comprises dans la plage de 20 à 250°C, le revêtement est calciné à des températures comprises dans la plage de 100 à 500°C, de préférence à des températures comprises dans la plage de 300 à 400°C.

4. Procédé selon la revendication 3, **caractérisé par** au moins l'une des caractéristiques suivantes :
- des alcoolates métalliques, de préférence des alkoxysilanes et de manière particulièrement préférée des trialkoxysilanes et/ou des tétraalkoxysilanes sont mis en oeuvre en tant que monomères,
- la production du liant sol-gel s'effectue par réaction d'au moins un monomère avec de l'eau en présence d'un catalyseur, de préférence en présence d'un acide comme catalyseur,
- l'hydrolyse du monomère s'effectue en présence de nanoparticules inorganiques,
- le degré de réticulation inorganique de la matrice de liant est de 60 à 80 %,
- le solvant du liant présente une pression de vapeur < 5 bar, de préférence < 1 bar, de manière particulièrement préférée < 0,1 bar, un point d'ébullition > 120°C, de préférence > 150°C, de manière particulièrement préférée > 200°C et/ou un indice d'évaporation > 10, de préférence > 500, de préférence > 1 000,
- un glycol, un éther de glycol, un terpinéol et/ou un polyol est utilisé comme solvant.

5. Procédé selon l'une des revendications précédentes 1 à 4, dans lequel le liant sous forme de matrice de liant contenant du SiO₂ comprend une résine de silicone, de préférence une résine de silicone modifiée par un alkyle et/ou un aryle, et de manière particulièrement préférée une résine de silicone modifiée par un méthyle et/ou un phényle.

6. Composition pour l'application d'un revêtement électro-conducteur sur un substrat, comprenant un liant ayant une matrice de liant contenant du SiO₂, ayant subi une réticulation inorganique, ledit liant étant un liant sol-gel et le degré de réticulation inorganique de la matrice de liant étant de 40 à 90 % en poids, de préférence de 50 à 80 %, le degré de réticulation inorganique étant déterminé par RMN du ²⁹Si, et comprenant du graphite lamellaire en tant que pigment électro-conducteur, la teneur en pigment électro-conducteur dans la composition étant de 10 à 40 % en poids et le pigment électro-conducteur étant dispersé dans la matrice de liant.

7. Composition selon la revendication 6, comprenant au moins l'une des caractéristiques suivantes :
- la teneur en pigment électro-conducteur est de 10 à 35 % en poids, de préférence de 12 à 30 % en poids et/ou
- des particules de graphite lamellaires sont présentes en tant que pigment électro-conducteur, lesquelles présentent des tailles de particules d90 dans la plage de 1 à 100 µm, de préférence dans la plage de 5 à 50 µm et de manière particulièrement préférée dans la plage de 10 à 25 µm,
- la matrice de liant est une matrice de liant sol-gel inorganique, le degré de réticulation inorganique de la matrice de liant sol-gel étant de préférence de 40 à 90 %, de manière particulièrement préférée de 50 à 80 %.

8. Substrat doté d'un revêtement électro-conducteur thermostable, ledit revêtement comprenant une matrice sol-gel contenant du SiO₂, ayant subi une réticulation inorganique dont le degré de réticulation inorganique est de 40 à 90 %, de préférence de 50 à 80 %, ledit degré de réticulation inorganique étant déterminé par RMN du ²⁹Si, et comprenant des particules de graphite lamellaires en tant que pigment électro-conducteur, lesdites particules de graphite lamellaires étant dispersées dans la matrice.

9. Substrat selon la revendication 8, dans lequel le revêtement contient des particules de graphite lamellaires comme pigment conducteur, lesdites particules de graphite présentant une taille d90 dans la plage de 1 à 100 µm, de préférence dans la plage de 2 à 50 µm, et de manière particulièrement préférée dans la plage de 3 à 25 µm.

10. Substrat selon l'une quelconque des revendications précédentes 8 ou 9, **caractérisée par** au moins l'une des caractéristiques suivantes :
- la proportion de pigment électro-conducteur dans le revêtement est de 20 à 80 % en poids,
- le revêtement présente une résistance surfacique de 5 à 1 000 ohm/², de préférence de 10 à 500 ohm/², de manière particulièrement préférée de 20 à 200 ohm/²,
- l'épaisseur de couche du revêtement est de 5 à 25 micromètres, de préférence de 5 à 20 micromètres et de manière particulièrement préférée de 5 à 15 micromètres,
- le revêtement contient des nanoparticules inorganiques, de préférence des nanoparticules oxydiques, de manière particulièrement préférée des nanoparticules de SiO₂.

11. Substrat selon l'une quelconque des revendications précédentes 8 à 10, une vitrocéramique LAS ayant des cristaux mixtes à haute teneur en quartz et/ou des cristaux mixtes de kéatite en tant que phase cristalline prédominante étant utilisée comme substrat et/ou la vitrocéramique étant transparente.

12. Utilisation du substrat revêtu selon l'une quelconque des revendications 8 à 11
- en tant que table de cuisson, vitre de four, vitre d'insert de cheminée ou panneaux de commande pour des appareils électroménagers, ledit revêtement électro-conducteur étant disposé dans la zone d'affichage et/ou dans la zone de cuisson des tables de cuisson,
- en tant que capteur tactile, capteur de débordement, champ électrique pour blindage ou en tant que partie d'un dispositif d'éclairage.
